# EUROPEAN PATENT APPLICATION

(11) **EP 3 929 823 A1**
(43) Date of publication of application: **29.12.2021**
(21) Application number: 21167148.2
(22) Date of filing: 07.04.2021
(51) Int. Cl.: G06N 3/04, G06N 3/08

(54) **PROGRAM, LEARNING METHOD, AND INFORMATION PROCESSING APPARATUS**

(30) Priority: 25.06.2020 JP 2020109935
(71) Applicant: FUJITSU LIMITED, Kanagawa 211-8588 (JP)
(72) Inventor: Kai, Yutaka, Kawasaki-shi, Kanagawa (JP); Kasagi, Akihiko, Kawasaki-shi, Kanagawa (JP)
(74) Representative: Hoffmann Eitle

(57) **Abstract**

A process includes starting a learning process for building a model including multiple layers each including a parameter. The learning process executes iterations, each including calculating output error of the model using training data and updating the parameter value based on the output error. The process also includes selecting two or more candidate layers representing candidates for layers, where the updating is to be suppressed, based on results of a first iteration of the learning process. The process also includes calculating, based on the number of iterations executed up to the first iteration, a ratio value which becomes larger when the number of iterations executed is greater, and determining, amongst the candidate layers, one or more layers, where the updating is to be suppressed at a second iteration following the first iteration. The number of one or more layers is determined according to the ratio value.

## Description

### FIELD

The embodiments discussed herein are related to a program, learning method, and information processing apparatus.

### BACKGROUND

Machine learning is sometimes employed as a data analytics technique using an information processing apparatus. In machine learning, training data indicating some known instances is collected. The information processing apparatus analyzes the training data to thereby build a model that generalizes the relationship between cause (sometimes referred to as an explanatory or independent variable or variables) and effect (sometimes referred to as a target or dependent variable). The information processing apparatus uses the model built to predict the outcomes of unknown instances. For example, an image recognition model for determining the class of an object captured in an image is built.

The information processing apparatus may generate a model including multiple layers. For example, machine learning may be deep learning for generating a multi-layer neural network. At this time, the information processing apparatus runs iterations to search for optimal values for parameters included in each layer. In each iteration, the information processing apparatus may evaluate error in the output of the model by using training data and update the parameter values based on the error. For example, error backward propagation (or backpropagation for short) is used for parameter optimization.

There is a proposed characteristic filtering method for automatically eliminating some of multiple explanatory variables included in training data from machine learning. According to the proposed characteristic filtering, a filtering threshold for values of each explanatory variable is determined based on a gradient calculated at the previous iteration. There is also a proposed learning apparatus for automatically deleting some layers in machine learning that generates a multi-layer neural network. The proposed learning apparatus calculates, for each of a plurality of layers, the degree of contribution to the output of the multi-layer neural network and performs machine learning again after deleting layers with low contributions.

International Publication Pamphlet No. WO 2017/157183; and
Japanese Laid-open Patent Publication No. 2019-185275.

In machine learning for building a model including multiple layers, parameter improvement does not always progress uniformly across all the layers. With increasing number of iterations, some layers may reach convergence of parameter improvement before others. For example, in a multi-layer neural network, parameter improvement convergence may take place faster in layers closer to the input layer than in those closer to the output layer.

In view of the above, it may be considered reasonable to employ a control method that suppresses, based on execution results of the latest iteration, parameter updates in some layers at subsequent iterations. However, the incremental parameter improvement does not always monotonically decrease with an increase in the number of iterations, and it may fluctuate over the short term. For this reason, immediate suppression of parameter updates in all layers whose execution results of the latest iteration meet convergence conditions may decrease the accuracy of the model to be built.

### SUMMARY

One aspect of the embodiments is to reduce the loss in accuracy in the case of stopping parameter updates of some layers included in a model during machine learning.

According to an aspect, there is provided a computer program that causes a computer to execute a process including starting a learning process for building a model including a plurality of layers which each include a parameter, the learning process executing iterations, each of which includes calculating output error of the model using training data and updating a value of the parameter of each of the plurality of layers based on the output error; selecting, amongst the plurality of layers, two or more candidate layers representing candidates for layers, in each of which the updating of the value of the parameter is to be suppressed, based on execution results of a first iteration of the learning process; and calculating, based on the number of the iterations executed up to the first iteration, a ratio value which increases with an increase in the number of the iterations executed, and determining, amongst the two or more candidate layers, one or more layers, in each of which the updating of the value of the parameter is to be suppressed at a second iteration following the first iteration, the number of the one or more layers being determined according to the ratio value.

### BRIEF DESCRIPTION OF DRAWINGS

FIG. 1 illustrates an information processor according to a first embodiment;
FIG. 2 is a block diagram illustrating exemplary hardware of an information processor according to a second embodiment;
FIG. 3 illustrates an exemplary structure of a multi-layer neural network;
FIG. 4 illustrates exemplary learning phases of machine learning;
FIG. 5 is a graph illustrating exemplary changes in prediction accuracy and error gradient in the machine learning;
FIG. 6 illustrates exemplary variations of error gradients across a plurality of layers;
FIG. 7 illustrates a first example of skipping parameter updates of some layers;
FIG. 8 is a graph illustrating exemplary calculation of an error gradient difference;
FIG. 9 is a graph representing an exemplary function of a skip layer adoption rate;
FIG. 10 illustrates a second example of skipping parameter updates of some layers;
FIG. 11 is a block diagram illustrating exemplary functions of the information processor;
FIG. 12 illustrates an exemplary error gradient table;
FIG. 13 is a flowchart illustrating an exemplary procedure of the machine learning;
FIG. 14 is a flowchart illustrating the exemplary procedure of the machine learning, continuing from FIG. 13;
FIG. 15 is a flowchart illustrating the exemplary procedure of the machine learning, continuing from FIG. 14;
FIG. 16 is a flowchart illustrating a first exemplary procedure of skip layer extraction;
FIG. 17 is a flowchart illustrating a second exemplary procedure of the skip layer extraction; and
FIG. 18 is a flowchart illustrating a third exemplary procedure of the skip layer extraction.

### DESCRIPTION OF EMBODIMENTS

Several embodiments will be described below with reference to the accompanying drawings.

### (a) First Embodiment

A first embodiment is described hereinafter.

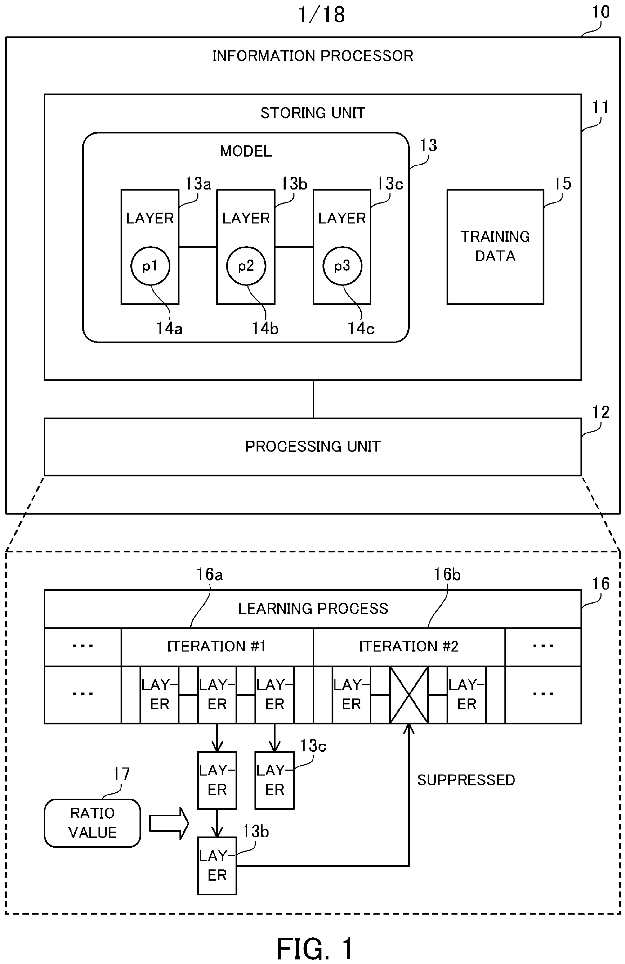

FIG. 1 illustrates an information processor according to the first embodiment.

An information processor 10 builds a model including a plurality of layers using training data by machine learning. The information processor 10 may be a client device or server device. The information processor 10 may be referred to, for example, as a computer or machine learning device.

The information processor 10 includes a storing unit 11 and a processing unit 12. The storing unit 11 may be volatile semiconductor memory such as random access memory (RAM), or a non-volatile storage device such as a hard disk drive (HDD) or flash memory. The processing unit 12 is, for example, a processor such as a central processing unit (CPU), graphics processing unit (GPU), or digital signal processor (DSP). Note however that the processing unit 12 may include an electronic circuit designed for specific use, such as an application specific integrated circuit (ASIC) or field programmable gate array (FPGA). The processor executes programs stored in memory such as RAM (or in the storing unit 11). The term "multiprocessor", or simply "processor", may be used to refer to a set of multiple processors.

The storing unit 11 stores a model 13 and training data 15.

The model 13 is a prediction model that predicts the value of a target variable from values of explanatory variables. The model 13 may be an image recognition model for predicting classes of objects captured in input images. The model 13 includes a plurality of layers each including a parameter. These layers may be connected in series. The model 13 may be a multi-layer neural network or convolutional neural network. The parameter value of each layer is determined through machine learning. The parameters may be weights associated with individual edges of a multi-layer neural network.

For example, the model 13 includes layers 13a, 13b, and 13c. The layer 13b follows the layer 13a, and the layer 13c follows the layer 13b. The layer 13a includes a parameter 14a. The layer 13b includes a parameter 14b. The layer 13c includes a parameter 14c. The training data 15 is a dataset used for parameter optimization of the model 13. The training data 15 includes a plurality of samples for each of which a training label is provided. The training data 15 may include a plurality of images to each of which a label indicating a class of an object is given.

The processing unit 12 executes a learning process 16 to optimize the parameters 14a, 14b, and 14c of the model 13 using the training data 15. In the learning process 16, the processing unit 12 runs iterations described below. The processing unit 12 may perform backward propagation on the model 13. At each iteration, the processing unit 12 inputs input date included in the training data 15 to the model 13, and calculates output error of the model 13 by comparing an output of the model 13 and a corresponding training label included in the training data 15.

Then, based on the calculated error, the processing unit 12 updates the values of the parameters of the individual layers included in the model 13. For example, for each of the multiple layers included in the model 13, the processing unit 12 calculates an error gradient which indicates the gradient of the error with respect to the parameter. The error gradient represents the change in the error observed when the value of the parameter is changed only slightly. The processing unit 12 updates the value of the parameter based on the error gradient. The processing unit 12 may change the value of the parameter by the amount obtained by multiplying the error gradient by a learning rate. The learning rate is a hyperparameter that controls the behavior of machine learning, and may be provided by the user.

In the middle of the learning process 16, the processing unit 12 sometimes suppresses updates of parameter values of some of the multiple layers included in the model 13. The suppression of processing in a given layer may include suppressing calculation of the error gradient. In the case of implementing workload distribution processing across a plurality of processing units, the suppression of processing in a given layer may include suppressing communication between the multiple processing units. The suppression of processing in a given layer may be referred to as skipping of the layer. Assume in the following that the processing unit 12 has already executed an iteration 16a but has yet to execute a later iteration 16b. The iteration 16b may immediately follow the iteration 16a.

Based on execution results of the iteration 16a, the processing unit 12 selects, from the multiple layers, two or more candidate layers representing candidates for layers in which updates of the parameter values are to be suppressed. For example, the processing unit 12 selects, from the multiple layers, each layer whose difference between an error gradient calculated at the iteration 16a and an error gradient calculated at the iteration preceding the iteration 16a is below a threshold. In the layers whose error gradient differences are less than their thresholds, learning of the parameters is not practically progressing. Assume, for example, that amongst the layers 13a, 13b, and 13c, the layers 13b and 13c are selected as candidate layers.

Next, the processing unit 12 calculates a ratio value 17 based on the number of iterations executed up to the iteration 16a. The ratio value 17 becomes larger with a greater number of executed iterations. For example, the processing unit 12 counts the number of iterations executed since the start of the learning process 16, and calculates the ratio value 17 based on the number of executed iterations. The ratio value 17 may be a real number greater than or equal to 0 and less than or equal to 1. The relationship between the number of executed iterations and the ratio value 17 may be defined by a function which increases the ratio value 17 monotonically with the increase in the number of executed iterations. For example, the relationship between the number of executed iterations and the ratio value 17 may be defined by a sigmoid curve.

Then, the processing unit 12 extracts a predetermined number of layers according to the ratio value 17 from the candidate layers selected above. The predetermined number of layers according to the ratio value 17 may be calculated by multiplying the number of candidate layers by the ratio value 17. When the layers 13b and 13c are candidate layers and the ratio value 17 is 0.5 (50%), the processing unit 12 extracts, for example, either one of the layers 13b and 13c. In the example of FIG. 1, the processing unit 12 extracts the layer 13b between the layers 13b and 13c.

The processing unit 12 suppresses a parameter update in the extracted layer at the iteration 16b, which comes after the iteration 16a. The processing unit 12 does not need to suppress a parameter update in each layer not extracted from the candidate layers. Therefore, the ratio value 17 represents the ratio of layers in which parameter updates are to be actually suppressed to all the candidate layers. In the case where the layer 13b is extracted, the value of the parameter 14b remains unchanged at the iteration 16b. When backward propagation is used, the processing unit 12 may propagate the error gradient of the layer 13b calculated at the iteration 16a back to the layer 13a. This allows the parameter 14a of the layer 13a to be updated at the iteration 16b.

Of the candidate layers, layers in which parameter updates are to be actually suppressed may be determined according to various criteria. For example, the processing unit 12 may preferentially extract layers having lower average error gradients over a most recent predetermined period of time. The processing unit 12 may preferentially extract, for example, layers having lower average error gradient differences over a most recent predetermined period of time. The processing unit 12 may preferentially extract, for example, layers closer to the input layer of the model 13. In addition, when a series of layers included in the model 13 is divided into two or more blocks, the processing unit 12 may distribute layers in which parameter updates are to be suppressed across the multiple blocks so that they do not concentrate in particular blocks. Further, the processing unit 12 may extract layers in which parameter updates are to be suppressed, for example, at intervals of a predetermined number of layers or more.

According to the information processor 10 of the first embodiment, two or more candidate layers, which represent candidates for layers in which parameter value updates are to be suppressed, are selected based on execution results of the iteration 16a. Based on the number of iterations executed up to the iteration 16a, the ratio value 17 is calculated, which becomes larger when the number of executed iterations is greater. Then, layers, the number of which corresponds to the ratio value 17, are determined amongst the candidate layers as those in which parameter value updates are to be suppressed at the iteration 16b.

Herewith, ineffectual parameter updates are suppressed in layers where no more improvement would be observed in the parameter values since their parameter optimization has converged faster than other layers. This reduces unnecessary processing in the machine learning, which in turn reduces computational complexity. As a result, it takes less time to execute the machine learning for building the model 13.

In addition, parameter updates are actually suppressed in only layers, the number of which corresponds to the ratio value 17, amongst the candidate layers whose parameter optimization appears to have converged according to the latest execution results. This allows taking into account the possibility of parameter values to improve subsequently again, thus increasing the accuracy of the model 13 compared to the case of immediately suppressing parameter updates of all the candidate layers. Further, the ratio value 17 increases as the learning process 16 progresses, which represents a long-term trend of a gradually increasing number of layers whose parameter optimization has converged. As a result, it is possible to incorporate a fine balance between reducing computational complexity of the learning process 16 and improving the accuracy of the model 13.

### (b) Second Embodiment

This part of the description explains a second embodiment.

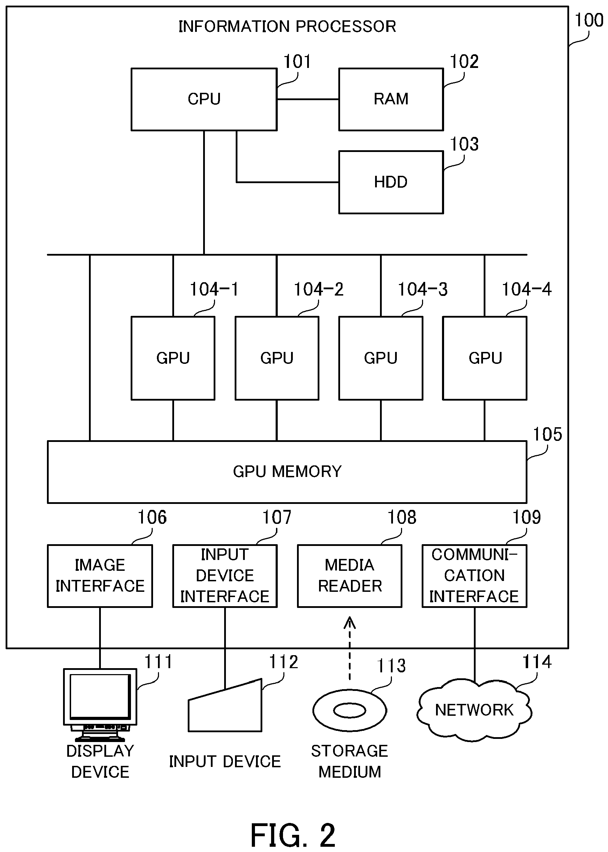

FIG. 2 is a block diagram illustrating exemplary hardware of an information processor according to the second embodiment.

An information processor 100 of the second embodiment generates a multi-layer neural network by deep learning. The multi-layer neural network is used, for example, in image recognition. The information processor 100 may be a client device or server device. The information processor 100 may be referred to, for example, as a computer or machine learning device. The information processor 100 corresponds to the information processor 10 according to the first embodiment.

The information processor 100 includes a CPU 101, a RAM 102, a HDD 103, GPUs 104-1 to 104-4, a GPU memory 105, an image interface 106, an input device interface 107, a media reader 108, and a communication interface 109. The CPU 101 or the GPUs 104-1 to 104-4 correspond to the aforementioned processing unit 12. The RAM 102, the HDD 103, or the GPU memory 105 corresponds to the aforementioned storing unit 11.

The CPU 101 is a processor configured to execute program instructions and also serves as a main processor for controlling the information processor 100. The CPU 101 reads out at least part of programs and data stored in the HDD 103, loads them into the RAM 102, and executes the loaded programs. The CPU 101 may cause the GPUs 104-1 to 104-4 to execute programs. The CPU 101 transfers programs and data from the RAM 102 to the CPU memory 105, then causes the GPUs 104-1 to 104-4 to execute the transferred programs, and loads operation results from the GPU memory 105 into the RAM 102. The CPU 101 sometimes causes GPUs of different information processors to execute programs via the communication interface 109.

The RAM 102 is volatile semiconductor memory for storing therein programs and data. The information processor 100 may be provided with a different type of memory other than RAM.

The HDD 103 is a non-volatile storage device to store therein software programs, such as an operating system (OS), middleware, and application software, and various types of data. The information processor 100 may be provided with a different type of storage device, such as flash memory or a solid state drive (SSD). The programs to be executed by the CPU 101 include platform and library programs used to control machine learning. The programs to be executed by the GPUs 104-1 to 104-4 include library programs for machine learning and user's application programs.

The GPUs 104-1 to 104-4 are processors configured to execute program instructions and also serve as hardware accelerators for performing specific types of operations fast. The GPUs 104-1 to 104-4 run a program in parallel on different data according to instructions from the CPU 101. Each of the GPUs 104-1 to 104-4 reads the program and data assigned to the GPU from the GPU memory 105, then runs the program, and stores operation results in the GPU memory 105.

The GPU memory 105 is volatile semiconductor memory for storing therein programs and data. The GPU memory 105 is used by the GPUs 104-1 to 104-4.

The image interface 106 produces video images in accordance with drawing commands from the CPU 101 and displays them on a screen of a display device 111 coupled to the information processor 100. The display device 111 may be any type of display, such as a cathode ray tube (CRT) display; a liquid crystal display (LCD); an organic electroluminescence (OEL) display, or a projector. An output device, such as a printer, other than the display device 111 may also be connected to the information processor 100.

The input device interface 107 receives input signals from an input device 112 connected to the information processor 100. Various types of input devices may be used as the input device 112, for example, a mouse, a touch panel, a touch-pad, or a keyboard. A plurality of types of input devices may be connected to the information processor 100.

The media reader 108 is a device for reading programs and data recorded on a storage medium 113. Various types of storage media may be used as the storage medium 113, for example, a magnetic disk such as a flexible disk (FD) or a HDD, an optical disk such as a compact disc (CD) or a digital versatile disc (DVD), and semiconductor memory. The media reader 108 copies the programs and data read out from the storage medium 113 to a different storage medium, for example, the RAM 102 or the HDD 103. The read programs are executed by the CPU 101 or a different processor. Note that the storage medium 113 may be a portable storage medium and used to distribute the programs and data. In addition, the storage medium 113 and the HDD 103 may be referred to as computer-readable storage media.

The communication interface 109 is connected to a network 114 and communicates with different information processors via the network 114. The communication interface 109 may be a wired communication interface connected to a wired communication device, such as a switch or router, or may be a wireless communication interface connected to a wireless communication device, such as a base station or access point.

Note that the information processor 100 may be provided in plurality to form a multi-node system in which the multiple information processors function as nodes. In that case, GPUs included in different nodes may run a program in parallel on different data. For example, two nodes each including four GPUs may be connected to the network 114 so that eight GPUs run the program in parallel. The CPU of one of the multiple nodes may control the GPUs of the nodes.

A model structure and machine learning are described next.

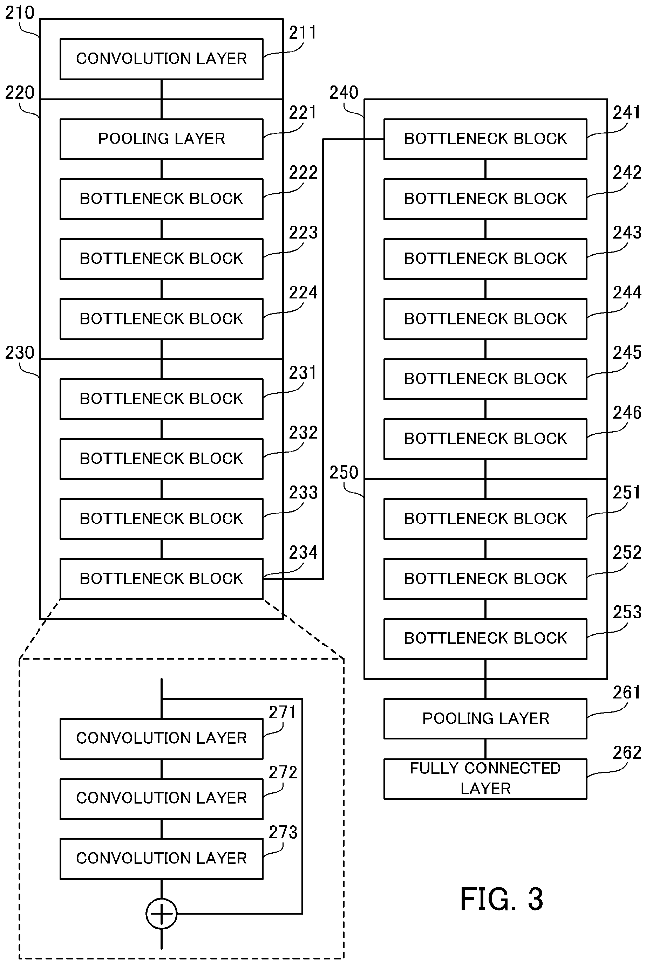

FIG. 3 illustrates an exemplary structure of a multi-layer neural network.

A model of the second embodiment is a multi-layer convolutional neural network for image recognition. The exemplary model illustrated in FIG. 3 is sometimes called ResNet-50; however, skip control described below is applicable to various multi-layer neural networks, and not limited to ResNet-50.

The model of FIG. 3 includes blocks 210, 220, 230, 240, and 250 connected in series. The block 210 is a leading block which receives an input image. The block 220 follows the block 210. The block 230 follows the block 220. The block 240 follows the block 230. The block 250 follows the block 240.

The block 210 includes a convolution layer 211. The convolution layer 211 performs convolution, which involves repetitive product-sum operations by sliding a filter called kernel. The size of the kernel is, for example, 7 by 7. An output of the convolution layer 211 is sometimes called feature map. The convolution layer 211 uses a stride of 2, by which the kernel slides over the input image. Therefore, both the height and width of the feature map output from the convolution layer 211 are halved from those of the input.

The block 220 includes a pooling layer 221 and bottleneck blocks 222, 223, and 224 connected in series. The pooling layer 221 performs pooling to integrate a predetermined number of neighboring elements into one element. The pooling layer 221 calculates one element, for example, from a square region of 3 by 3. The pooling layer 221 performs, for example, max pooling which takes the max value in the 3 by 3 elements. The pooling layer 221 uses a stride of 2, and therefore, both the height and width of the output of the pooling layer 221 are halved from those of the input.

Each of the bottleneck blocks 222, 223, and 224 successively performs multiple convolutions on its input, then integrates the convolution results and the original input and outputs the integrated results. The bottleneck blocks 222, 223, and 224 individually include convolution layers 271, 272, and 273 connected in series. Each of the convolution layers 271, 272, and 273 performs convolution. The convolution layers 272 and 273 use a stride of 1. Therefore, both the height and width of the output of each of the convolution layers 272 and 273 are unchanged and the same as those of the input.

On the other hand, the convolution layer 271 may use a stride of 1, or other times 2. With a stride of 1, both the height and width of the output of the convolution layer 271 are the same as those of the input. With a stride of 2, both the height and width of the output of the convolution layer 271 are halved from those of the input. Note that in the bottleneck blocks 222, 223, and 224, each convolution layer uses a stride of 1, and therefore the height and width of their output are unchanged. Lastly, the original input is added to the output of the convolution layer 273.

The block 230 includes bottleneck blocks 231, 232, 233, and 234 connected in series. The structures of the bottleneck blocks 231, 232, 233, and 234 are the same as those in the block 220. Note however that the convolution layer 271 of the bottleneck block 231 uses a stride of 2 while the stride of the remaining convolution layers is set to 1. Therefore, both the height and width of the output of the block 230 are halved from those of the input.

The block 240 includes bottleneck blocks 241, 242, 243, 244, 245, and 246 connected in series. The structures of the bottleneck blocks 241, 242, 243, 244, 245, and 246 are the same as those in the blocks 220 and 230. Note however that the convolution layer 271 of the bottleneck block 241 uses a stride of 2 while the stride of the remaining convolution layers is set to 1. Therefore, both the height and width of the output of the block 240 are halved from those of the input.

The block 250 includes bottleneck blocks 251, 252, and 253 connected in series. The structures of the bottleneck blocks 251, 252, and 253 are the same as those in the blocks 220, 230, and 240. Note however that the convolution layer 271 of the bottleneck block 251 uses a stride of 2 while the stride of the remaining convolution layers is set to 1. Therefore, both the height and width of the output of the block 250 are halved from those of the input.

Thus, the set of the blocks 210, 220, 230, 240, and 250 includes sixteen bottleneck blocks and two other layers, in total fifty major layers. To the back of the block 250, a pooling layer 261 and a fully connected layer 262 are connected in series.

The pooling layer 261 performs pooling. The pooling layer 261 performs, for example, average pooling which calculates the average of a predetermined number of neighboring elements. The fully connected layer 262 performs a fully connected operation which calculates numerical values from the whole elements output from the pooling layer 261 without holding adjacency relationships between the elements. The fully connected layer 262 calculates scores for individual classes of recognizable objects (e.g., 1000 classes) . The score of a given class indicates the probability of an object present in the input image belonging to the class.

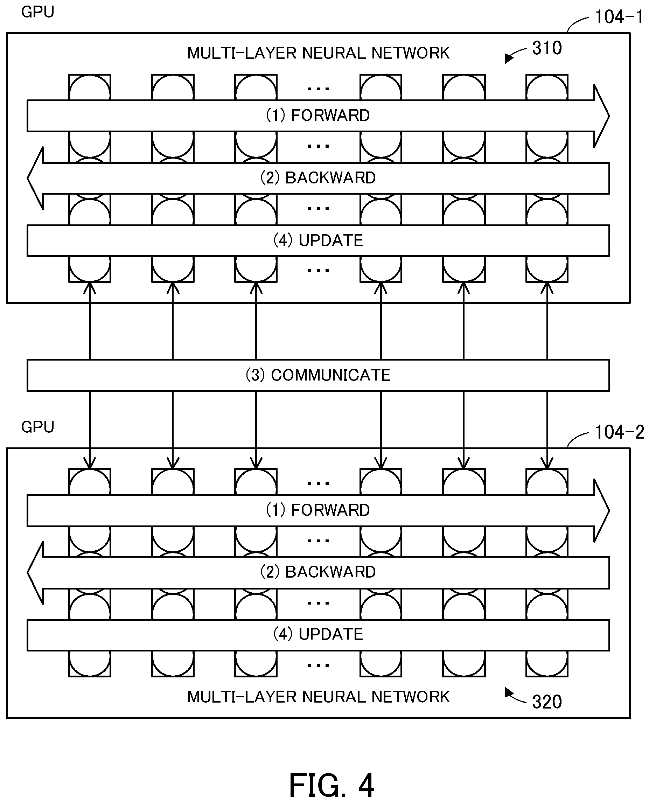

FIG. 4 illustrates exemplary learning phases of machine learning.

Let us here consider the case of parallelizing machine learning using the two GPUs 104-1 and 104-2 for ease of explanation. Note however that the information processor 100 is able to parallelize machine learning using a greater number of GPUs.

The GPU 104-1 hosts a multi-layer neural network 310. The GPU 104-2 hosts a multi-layer neural network 320 identical to the multi-layer neural network 310. Each of the multi-layer neural networks 310 and 320 is, for example, a multi-layer convolutional neural network illustrated in FIG. 3.

The multi-layer neural networks 310 and 320 individually include a plurality of layers. Each layer contains a plurality of nodes arranged. Each layer may have a different number of nodes. When there is another layer preceding a given layer, edges are provided between nodes of the given layer and those of the preceding layer. When there is another layer following a given layer, edges are provided between nodes of the given layer and those of the following layer. All these edges have weights associated with them. The weights are parameters whose values are determined through machine learning. Note that the weights associated with the edges between the nodes of the given layer and those of the preceding layer may be interpreted as parameters included in the given layer. Alternatively, the weights associated with the edges between the nodes of the given layer and those of the following layer may be interpreted as parameters included in the given layer.

Machine learning for building an image recognition model uses training data including a plurality of samples in which images and training labels indicating classes of objects are associated with each other. The GPUs 104-1 and 104-2 process in parallel different samples to thereby speed up machine learning.

Machine learning includes a predetermined number of epochs. For example, machine learning for building the multi-layer convolutional neural network of FIG. 3 includes fifty to sixty epochs. Each epoch includes a predetermined number of iterations, for example, 760 iterations. Between two adjacent epochs, validation is performed to assess prediction accuracy of the multi-layer neural networks 310 and 320 at the time. As a metric of the prediction accuracy, accuracy may be used. Accuracy indicates the ratio between the number of correctly predicted samples and the total number of tested samples.

Different iterations in the same epoch usually use different samples from the training data. Iterations of different epochs may use the same samples again. In the same iteration, different GPUs use different samples. A sample learning scheme of the second embodiment is online or mini-batch learning. By online learning, one GPU uses one sample per iteration. By mini-batch learning, one GPU uses a predetermined number of samples at each iteration. The predetermined number is, for example, about several dozen.

Each iteration of the parallelized machine learning includes four phases: FORWARD, BACKWARD, COMMUNICATE, and UPDATE. In the FORWARD phase, the GPU 104-1 inputs an image to the leading layer (input layer) of the multi-layer neural network 310. Subsequently, numerical calculations are sequentially performed from the input layer toward the last layer (output layer) of the multi-layer neural network 310, and prediction results are then output from the output layer. The GPU 104-1 calculates error between the prediction results and the training label. For example, the GPU 104-1 compares a prediction vector enumerating scores of a plurality of classes against a correct answer vector having a bit-value of 1 corresponding to the correct class and bit-values of 0 corresponding to other classes, and calculates the error by taking the square-root of the sum of the squares of the difference between the two vectors. In mini-batch learning, the GPU 104-1 calculates the average of the errors over the predetermined number of samples.

When taking a look at a single node, the GPU 104-1 multiplies individual values output from multiple nodes that belong to a layer preceding the node by weights associated with their corresponding edges and then sums the resultant products to thereby compute a weighted sum of the output values of the preceding layer. The GPU 104-1 inputs the weighted sum to an activation function to thereby obtain an output value of the node. Examples of the activation function include sigmoid function, ramp function, and softmax function. The activation function to be used may be specified by the user as a hyperparameter. The GPU 104-1 provides the output value of the node for multiple nodes belonging to the following layer. In this manner, in the FORWARD phase, numerical values propagate through the multi-layer neural network 310 from the input layer toward the output layer. The GPU 104-2 runs the FORWARD phase on the multi-layer neural network 320, in parallel with the GPU 104-1.

In the BACKWARD phase, the GPU 104-1 calculates the gradient of the error with respect to the weight associated with each edge in reverse order, starting from the output layer and working back through the multi-layer neural network 310 to the input layer. When the error is deemed to be a function of the weight associated with each edge, the error gradient corresponds to a value obtained by partial differentiation of the error with respect to the weight. The error gradient represents a change in the error in response to a small change in the weight of the associated edge. These error gradients are used to update the weights of the individual edges to reduce the error. Backward propagation is used as an algorithm for computing the error gradients.

When taking a look at an edge between node #1 and node #2 in a layer following that of node #1, the GPU 104-1 computes the error gradient with respect to the weight associated with the edge based on the following information: the current weight and error gradient associated with each edge between node #2 and individual nodes in a layer following that of node #2; the output value of node #2 calculated in the FORWARD phase; the output value of node #1 calculated in the FORWARD phase; and an activation function. Error gradients are computed sequentially in order from the nearest to the farthest from the output layer. The GPU 104-2 runs the BACKWARD phase on the multi-layer neural network 320, in parallel with the GPU 104-1.

In the COMMUNICATE phase, the GPUs 104-1 and 104-2 communicate with each other and add up the error gradients computed in the BACKWARD phase with respect to each edge. Then, the GPUs 104-1 and 104-2 divide the summed error gradients for the same edge calculated from different samples by the number of GPUs, to thereby obtain the average of the error gradients. Note that the average error gradient calculated by the GPU 104-1 and that by the GPU 104-2 are the same. For the communication between the GPUs 104-1 and 104-2, Message Passing Interface (MPI) collective communication may be used. For example, an AllReduce operation is used.

Note that in the COMMUNICATE phase, computation may proceed in the forward direction from the input layer to the output layer, or in the backward direction from the output layer to the input layer. In the BACKWARD phase, computation proceeds in one direction, from the output layer to the input layer, and therefore the COMMUNICATE phase may be initiated for layers in which error gradients have already been calculated, prior to completion of the BACKWARD phase.

In the UPDATE phase, the GPU 104-1 updates the weight of each edge in the multi-layer neural network 310 using the error gradients calculated in the COMMUNICATE phase. At this time, the GPU 104-1 converts each error gradient into a subtraction value and then subtracts the subtraction value from the current weight, instead of subtracting the very error gradient from the current weight. The GPU 104-1 uses a learning rate, which is a hyperparameter, in converting the error gradient into the subtraction value.

The learning rate may be set to the same value for all the blocks 210, 220, 230, 240, and 250, or may be set individually for each of them. According to the second embodiment, the learning rate automatically decreases when the number of epochs already trained has reached a threshold, as described below. A larger learning rate means that the latest samples have a greater effect on the weights, and a smaller learning rate means that the latest samples are less reflected in the weights. The GPU 104-1 uses, for example, a value obtained by multiplying the error gradient by the learning rate as the subtraction value. In this case, an updated weight w' is defined as: w' = w - η × Δw, where w is the weight before update, Δw is the error gradient, and η is the learning rate.

The GPU 104-2 runs the UPDATE phase on the multi-layer neural network 320, in parallel with the GPU 104-1. Note that in the UPDATE phase, computation may proceed in the forward direction from the input layer to the output layer, or in the backward direction from the output layer to the input layer.

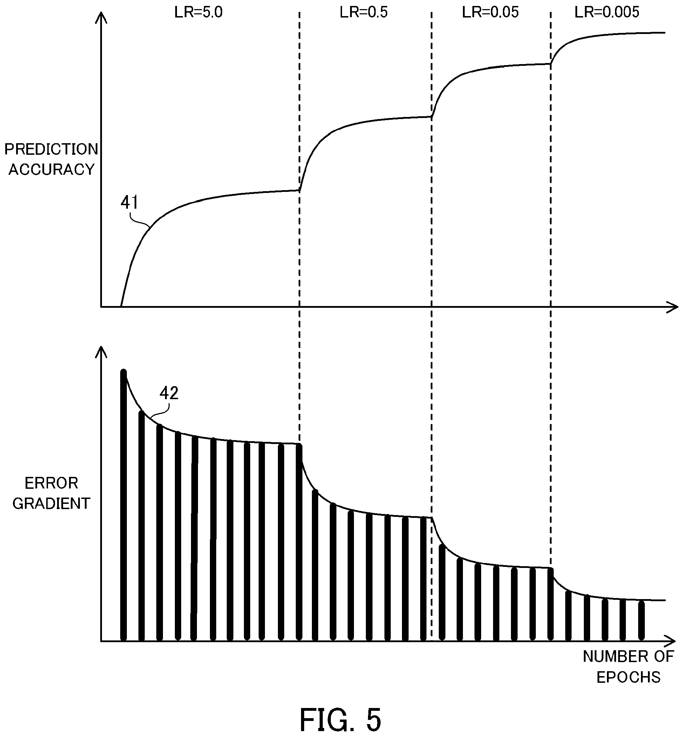

FIG. 5 is a graph illustrating exemplary changes in prediction accuracy and error gradient in machine learning.

When the machine leaning described above in FIG. 4 is performed, prediction accuracy of the model may change as indicated by a curve 41. The curve 41 represents prediction accuracy calculated in each validation between epochs. Here, accuracy is used as a metric of the prediction accuracy. In addition, when the machine leaning described above in FIG. 4 is performed, the error gradient may change as indicated by a curve 42. The curve 42 represents the average of absolute values of error gradients calculated for all weights.

The information processor 100 first sets the learning rate (LR) to 5.0. In the early period after the learning rate is set to 5.0, the prediction accuracy rises rapidly while the error gradient sharply decreases as the number of epochs increases. However, repeated weight updates with a fixed learning rate may result in the weights oscillating around the optimal values and never come closer to the optima. For this reason, there are limits to improving the prediction accuracy and decreasing the error gradient. As a result, the prediction accuracy may monotonically increase and change along an upward convex curve, and the error gradient may monotonically decrease and change along a downward convex curve.

In view of the above, the information processor 100 decreases the learning rate once the number of epochs already trained reaches a predetermined number. For example, once 30 epochs have been completed, the information processor 100 changes the learning rate to one-tenth of the initial value, i.e., 0.5. With the change of the learning rate to 0.5, the prediction accuracy again rises rapidly while the error gradient sharply decreases as the number of epochs increases. This is because the reduction in the amount that the weights are updated each time drives the weights closer to the optimal values compared to when the learning rate is 5.0. Note however that, if the learning rate remains the same at 0.5, there are limits to improving the prediction accuracy and decreasing the error gradient, as in the case of the learning rate being 5.0.

Therefore, the information processor 100 again decreases the learning rate when the number of epochs already trained has reached a predetermined number. For example, the information processor 100 again changes the learning rate to one-tenth of the current value, i.e., 0.05. In a similar fashion, when the number of epochs already trained has reached yet another predetermined number, the information processor 100 again changes the learning rate to one-tenth of the current value, i.e., 0.005. In this manner, the information processor 100 lowers, in stages, the learning rate according to the number of epochs trained.

Next described is improving efficiency of machine learning. The curve 42 indicates that the average of error gradients of all the layers included in the model decreases monotonically. However, the error gradients do not always converge uniformly across all the layers, and progress in convergence of the error gradients varies among different layers.

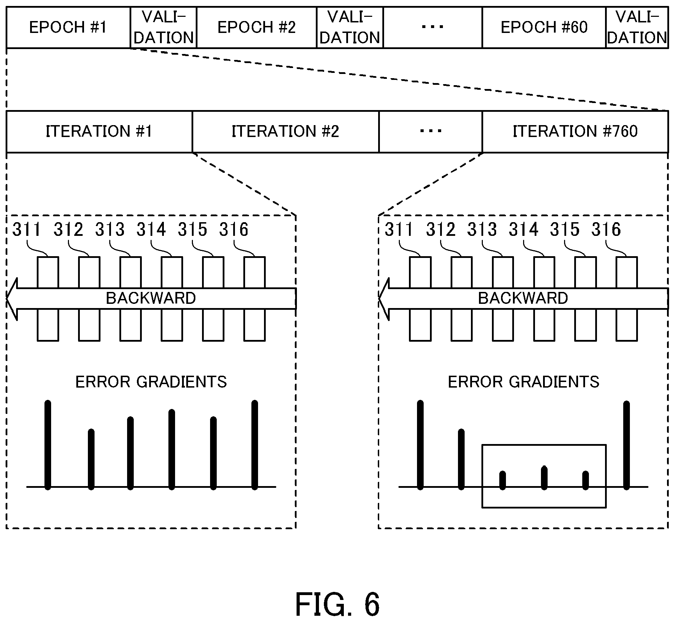

FIG. 6 illustrates exemplary variations of error gradients across a plurality of layers.

The multi-layer neural network 310 includes layers 311, 312, 313, 314, 315, and 316. According to FIG. 4 above, the GPU 104-1 runs the BACKWARD, COMMUNICATE, and UPDATE phases for all the layers at each iteration. Hence, the GPU 104-1 calculates error gradients of the layers 311, 312, 313, 314, 315, and 316 at iteration #1 of epoch #1. The GPU 104-1 also calculates error gradients of the layers 311, 312, 313, 314, 315, and 316 at iteration #760 of epoch #1.

Note here that the error gradient of each layer illustrated in FIG. 6 is the average of absolute values of multiple error gradients corresponding to individual weights included in the layer. At iteration #1 of epoch #1, there are large error gradients across all the layers 311, 312, 313, 314, 315, and 316. On the other hand, at iteration #760 of epoch #1, the error gradients of the layers 313, 314, and 315 are reduced while the error gradients of the layers 311, 312, and 316 still remain large.

Thus, as the learning iterations proceed after a new learning rate is set, convergence of the error gradients may be seen only in some layers ahead of the rest of the multiple layers included in the model. In the case of a multi-layer convolutional neural network, the error gradients of layers close to the input layer (front-side layers) sometimes converge faster than those close to the output layer (rear-side layers). The weights of the layers whose error gradients have converged are unlikely to come any closer to their optimal values even if further iterations are executed with the same learning rate. That is, in other words, the layers whose error gradients have converged are practically not learning any more.

Running the BACKWARD, COMMUNICATE, and UPDATE phases, at each iteration, in all layers including the layers whose error gradients have converged may involve unnecessary processing not contributing to improving the prediction accuracy and thus causing an excessive increase in computational complexity. In view of this, the information processor 100 may skip processes in some layers. The processes to be skipped are the BACKWARD, COMMUNICATE, and UPDATE phases.

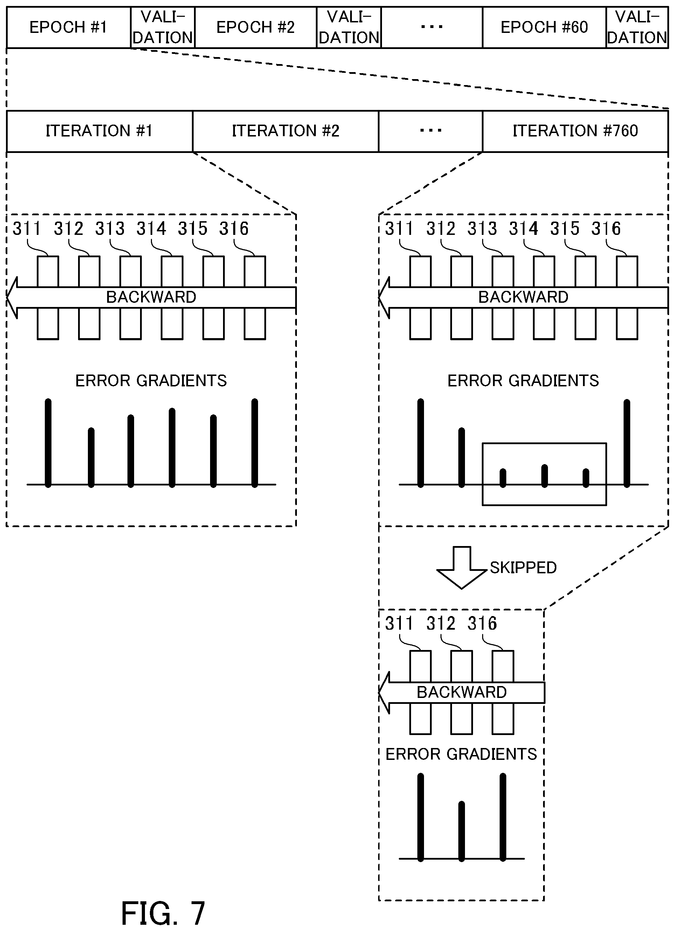

FIG. 7 illustrates a first example of skipping parameter updates of some layers.

At iteration #1 of epoch #1, none of the layers 311, 312, 313, 314, 315, and 316 is specified as a skip target. Therefore, the GPU 104-1 runs the FORWARD, BACKWARD, COMMUNICATE, and UPDATE phases in all the layers 311, 312, 313, 314, 315, and 316. Subsequently, the GPU 104-1 monitors the error gradients of the layers 311, 312, 313, 314, 315, and 316 to detect layers whose error gradients have reached convergence. Assume here that the error gradients of the layers 311, 312, and 316 have yet to come to convergence while those of the layers 313, 314, and 315 have converged. In this case, the GPU 104-1 designates the layers 313, 314, and 315 as skip targets.

At this time, the GPU 104-1 detects layers whose error gradients have reached convergence, based on the error gradients computed in the BACKWARD phase. The GPU 104-2 detects, based on the error gradients computed in the BACKWARD phase, layers whose error gradients have reached convergence, in parallel with the GPU 104-1. Then, in the COMMUNICATE phase, the GPUs 104-1 and 104-2 mutually exchange their detection results for error gradient convergence, to thereby bring their decisions on skip-target layers (skip layers) into line.

The skip layers to be selected may be layers whose error gradients have converged on at least one of the GPUs, or on all the GPUs. Alternatively, the skip layers may be layers each with the number or ratio of GPUs, on which the error gradient has reached convergence, being greater than or equal to a threshold. Note that the GPUs 104-1 and 104-2 may use the average error gradients calculated in the COMMUNICATE phase to mutually determine skip layers.

At iteration #760 of epoch #1, the GPU 104-1 runs the FORWARD phase in the layers 311, 312, 313, 314, 315, and 316. In addition, the GPU 104-1 runs the BACKWARD, COMMUNICATE, and UPDATE phases in the layers 311, 312, and 316. On the other hand, the GPU 104-1 leaves out the BACKWARD, COMMUNICATE, and UPDATE phases in the layers 313, 314, and 315.

Omitting the BACKWARD, COMMUNICATE, and UPDATE phases in some layers reduces computational complexity and the amount of traffic involved in each iteration, which shortens the time to run the iteration. Note here that, to compute the error gradient of the layer 312, the error gradient of the following layer 313 is used. When the layer 313 is a skip layer, the GPU 104-1 uses the error gradient of the layer 313 calculated last time to compute the error gradient of the layer 312. For this reason, when designating the layer 313 as a skip layer, the GPU 104-1 keeps error gradients with respect to individual weights of the layer 313 calculated last time.

Next described is an example of how to determine error gradient convergence.

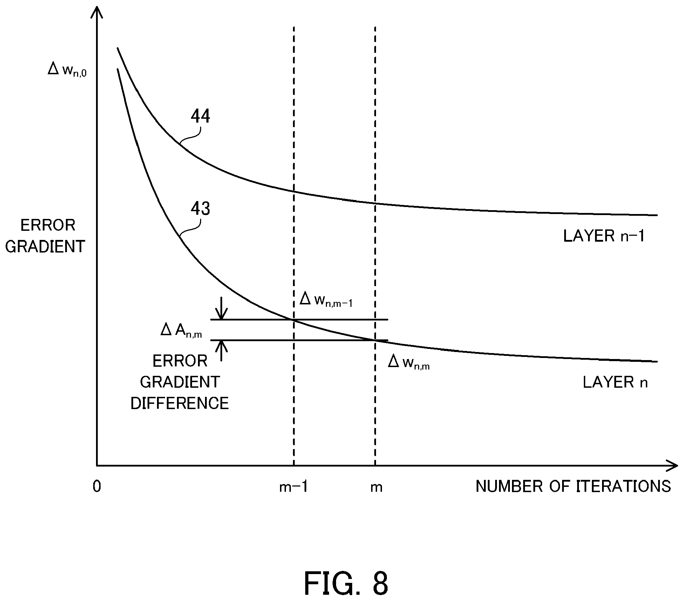

FIG. 8 is a graph illustrating exemplary calculation of an error gradient difference.

A curve 43 represents temporal changes in the error gradient of the n^{th} layer (layer n) of the multi-layer neural network 310. A curve 44 represents temporal changes in the error gradient of the n-1^{th} layer (layer n-1). In FIG. 8, the horizontal axis represents the number of iterations. Note in FIG. 8 that the number of iterations being 0 corresponds to an iteration immediately after a new learning rate is set. Even if one epoch is completed and a new epoch starts, the number of iterations on the horizontal axis of FIG. 8 is not reset unless the learning rate is changed. Therefore, the number of iterations on the horizontal axis of FIG. 8 may reach 760 or more.

Let us consider that the GPU 104-1 determines whether to designate layer n as a skip layer at iteration m. At iteration m-1, the GPU 104-1 keeps an error gradient Δw_{n,m-1} of layer n. At iteration m, the GPU 104-1 calculates an error gradient Δw_{n,m} of layer n, and then subtracts the error gradient at iteration m from the error gradient at iteration m-1 to obtain an error gradient difference ΔA_{n,m}, that is, ΔA_{n,m} = Δw_{n,m-1} - Δw_{n,m}.

In addition, at iteration 0 immediately after the new learning rate is set, the GPU 104-1 keeps an error gradient Δw_{n,0} (initial error gradient) of layer n. The GPU 104-1 calculates a threshold based on the error gradient Δw_{n,C}. For example, the GPU 104-1 calculates 5% of the initial error gradient, i.e., 0.05 × Δw_{n,0}, as the threshold. The ratio to the initial error gradient may be a hyperparameter specified by the user.

The GPU 104-1 determines whether the error gradient difference ΔA_{n,m} is below the threshold. If the error gradient difference ΔA_{n,m} is greater than or equal to the threshold, the GPU 104-1 does not designate layer n as a skip layer and runs, ongoingly at iteration m+1, the BACKWARD, COMMUNICATE, and UPDATE phases in layer n. On the other hand, if the error gradient difference ΔA_{n,m} is below the threshold, the GPU 104-1 designates layer n as a skip layer, and then leaves out the BACKWARD, COMMUNICATE, and UPDATE phases in layer n at iteration m+1 and subsequent iterations.

The GPU 104-1 also determines whether to designate layer n-1 as a skip layer in the same manner as for layer n. As indicated by the curves 43 and 44, it is sometimes the case that error gradient convergence occurs faster at layer n-1 than at layer n. In this case, layer n-1 may be designated as a skip layer before layer n. The GPU 104-1 cancels the designation of skip layers when the learning rate is changed.

Note that the method explained in FIG. 8 is an example of determining layers practically not learning any more. The information processor 100 may use a different method to determine such layers. For example, the information processor 100 may select layers whose latest error gradient difference is below a fixed threshold (e.g., a threshold specified by the user). Alternatively, the information processor 100 may select layers whose latest error gradient is below a threshold.

Next described are effects of leaving out parameter updates of some layers on model accuracy. For ease of explanation, the curves 43 and 44 of FIG. 8 represent that the error gradients decrease monotonically with the increase in the number of executed iterations. However, the error gradients may fluctuate in the short term and do not always decrease monotonically. Therefore, even if the decrease in the error gradient of a layer has temporarily ceased and meets a convergence condition, there is a possibility that the error gradient of the layer could later start decreasing again and fail to meet the convergence condition.

For this reason, immediate stop of parameter updates in all layers whose execution results of the latest iteration meet the convergence condition may lead to immature convergence and thus deprive the parameter values of a chance to come closer to their optimal values. This may result in reducing prediction accuracy of the model. On the other hand, from a long-term perspective, the number of layers practically not learning any more increases as the machine learning progresses.

In view of the above, the information processor 100 selects, as skip candidates, layers whose execution results of the latest iteration satisfy a convergence condition. Then, the information processor 100 designates a certain percentage of the skip candidates as skip layers, and leaves the remaining skip candidates not designated. Note that the percentage of the skip candidates adopted as skip layers is referred to hereinafter as adoption rate, and the information processor 100 calculates the adoption rate as a variable rate that increases as the machine learning progresses.

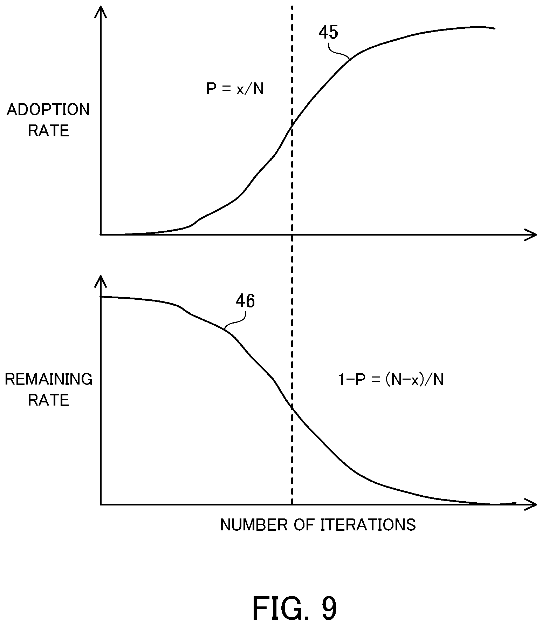

FIG. 9 is a graph representing an exemplary function of the skip layer adoption rate.

A curve 45 represents changes in the adoption rate in relation to the number of iterations. An adoption rate P is a ratio of the number of skip layers x to the number of skip candidates N and thus defined as: P = x/N. The adoption rate P is a real number greater than or equal to 0 and less than or equal to 1. A curve 46 represents changes in a remaining rate in relation to the number of iterations. The remaining rate is obtained by subtracting the adoption rate P from 1. The remaining rate 1-P is a ratio of the number of remaining layers (i.e., the number of layers other than the skip layers) N-x to the number of skip candidates N, and thus defined as: 1 - P = (N - x)/N. The remaining rate 1-P is a real number greater than or equal to 0 and less than or equal to 1.

In FIG. 9 with the curves 45 and 46, the horizontal axis represents the total number of iterations since the start of the machine learning. Therefore, the number of iterations on the horizontal axis is not reset at the time of either an epoch change or a change in the learning rate. In the case where the number of epochs and the number of iterations per epoch are set to 60 and 760, respectively, the maximum number of iterations is: 60 × 760 - 1.

The curve 45 represents that the adoption rate increases monotonically as the number of iterations increases. The curve 46 represents that the remaining rate decreases monotonically as the number of iterations increases. The curve 45 may be a sigmoid curve. In that case, the adoption rate gently increases at the beginning of the machine learning, then rises substantially in the middle, and increases gently toward the end. When the number of iterations is 0, the adoption rate P may be 0 (P = 0) . When the number of iterations reaches the maximum, the adoption rate P may be 1 (P = 1). When the number of iterations is intermediate, the adoption rate P may be 0.5 (P = 0.5). Note that the curve 45 may be a different type of curve or a straight line. In addition, a function used to calculate the adaption rate may be specified by the user as a hyperparameter.

When selecting N skip candidates at a given iteration, the information processor 100 refers to the curve 45 to determine the adoption rate P corresponding to the iteration. The information processor 100 determines the number of skip layers x, which is obtained by multiplying the number of skip candidates N by the adoption rate P. When P = 0.5, the information processor 100 adopts half of the skip candidates as skip layers. It is expected that the number of skip candidates N increases with an increase in the number of iterations. Therefore, the number of skip layers x increases as the number of skip candidates N and the adoption rate P increase.

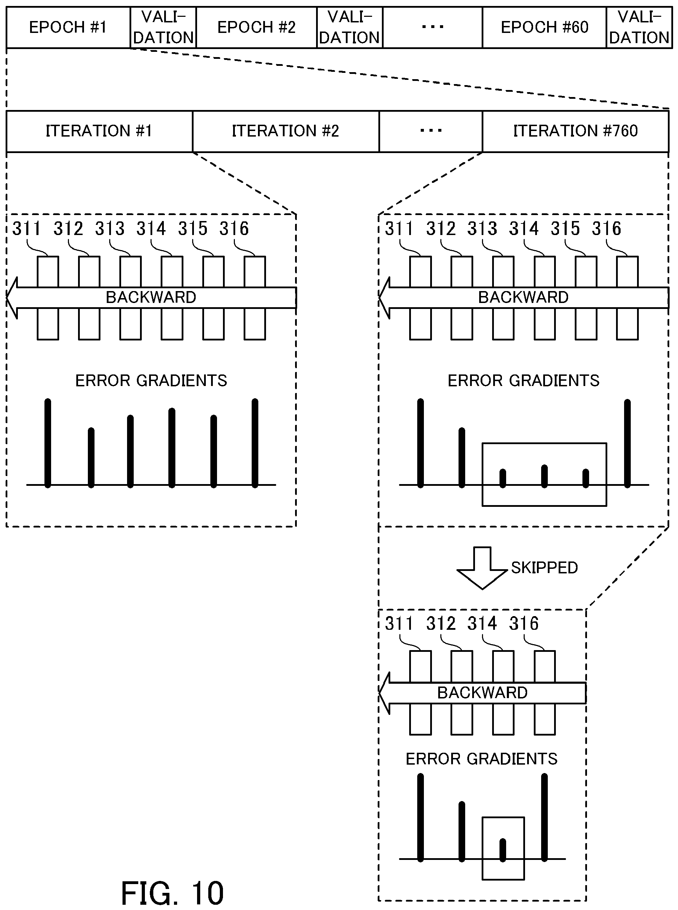

FIG. 10 illustrates a second example of skipping parameter updates of some layers.

At iteration #1 of epoch #1, none of the layers 311, 312, 313, 314, 315, and 316 is specified as a skip target. Therefore, the GPU 104-1 runs the FORWARD, BACKWARD, COMMUNICATE, and UPDATE phases in all the layers 311, 312, 313, 314, 315, and 316. Subsequently, the GPU 104-1 monitors the error gradients of the layers 311, 312, 313, 314, 315, and 316 to detect each layer satisfying a convergence condition. Assume here that the layers 311, 312, and 316 do not satisfy the convergence condition while the layers 313, 314, and 315 satisfy the convergence condition. In this case, the GPU 104-1 selects the layers 313, 314, and 315 as skip candidates.

Assume that, at this time, the GPU 104-1 calculates the adoption rate corresponding to the current iteration as 2/3. In this case, the GPU 104-1 designates, as skip layers, two layers out of the skip candidate layers 313, 314, and 315. Assume here that the GPU 104-1 designates the layers 313 and 315 as skip layers while leaving the layer 314 not designated.

At iteration #760 of epoch #1, the GPU 104-1 runs the FORWARD phase in the layers 311, 312, 313, 314, 315, and 316. In addition, the GPU 104-1 runs the BACKWARD, COMMUNICATE, and UPDATE phases in the layers 311, 312, 314, and 316. On the other hand, the GPU 104-1 leaves out the BACKWARD, COMMUNICATE, and UPDATE phases in the layers 313 and 315. Thus, in the middle of the machine learning, only some of the skip candidates satisfying the convergence condition are selected as skip layers, and the adoption rate increases as the machine learning progresses. In this manner, it is possible to reduce the loss in accuracy of the model due to immaturely stopping parameter updates.

Next described is how to extract x skip layers from N skip candidates. The information processor 100 is able to randomly extract x skip layers from N skip candidates. Note however that the information processor 100 may use any one of five criteria explained below, or two or more of those criteria below may be combined instead.
(D1) The information processor 100 calculates, for each layer, the time average of error gradients (average error gradient) over a predetermined number of most recent iterations. The predetermined number of most recent iterations may be 760 iterations, which are equivalent to one epoch. The average error gradient may be reset at the start of a new epoch or at the time of a change in the learning rate. The information processor 100 may preferentially extract layers with smaller average error gradients from the skip candidates. Alternatively, the information processor 100 may extract layers whose average error gradients are below a threshold.
(D2) The information processor 100 calculates, for each layer, the time average of error gradient differences (average difference) over a predetermined number of most recent iterations. The predetermined number of most recent iterations may be 760 iterations, which are equivalent to one epoch. The average difference may be reset at the start of a new epoch or at the time of a change in the learning rate. The information processor 100 may preferentially extract layers with smaller average differences from the skip candidates. Alternatively, the information processor 100 may extract layers whose average differences are below a threshold.
(D3) The information processor 100 determines skip layers based on the structures of the blocks 210, 220, 230, 240, and 250 of the multi-layer neural network illustrated in FIG. 3. It is preferable to avoid concentration of skip layers in the same blocks. For example, the information processor 100 extracts, amongst the skip candidates, one layer or up to a predetermined number of layers from each of the blocks 210, 220, 230, 240, and 250 and leaves the remaining skip candidates not designated.
   Note also that it is preferable to avoid concentration of skip layers in the same bottleneck blocks. For example, the information processor 100 extracts at most one layer from each bottleneck block amongst the skip candidates, and leaves the remaining skip candidates not designated. In the case where two or more skip candidates have been selected from the same block or bottleneck block, the information processor 100 may extract, from the two or more skip candidates, a skip layer randomly or a skip layer closer to the input layer. The information processor 100 adopts only convolution layers as skip layers, that is, does not use layers other than the convolution layers as skip layers.
(D4) The information processor 100 determines skip layers based on the space between skip candidates in the multi-layer neural network. It is preferable to distribute the skip layers across the entire multi-layer neural network such that they do not appear successively. For example, the information processor 100 extracts, from the skip candidates, skip layers at intervals of a predetermined number of layers (e.g., two layers) or more. If two or more skip candidates are crowded, the information processor 100 thins out some skip candidates to thereby allow space between adjacent skip layers.
(D5) The information processor 100 preferentially extracts layers closer to the input layer.

In the second embodiment, the following combinations of criteria are given as illustrative examples of preferred combinations: a combination of the criteria D1, D4, and D5; a combination of the criteria D2, D4, and D5; and a combination of the criteria D3, D1, D2, and D5. These preferred combinations are described later in detail.

Next described are functions and processing procedures of the information processor 100.

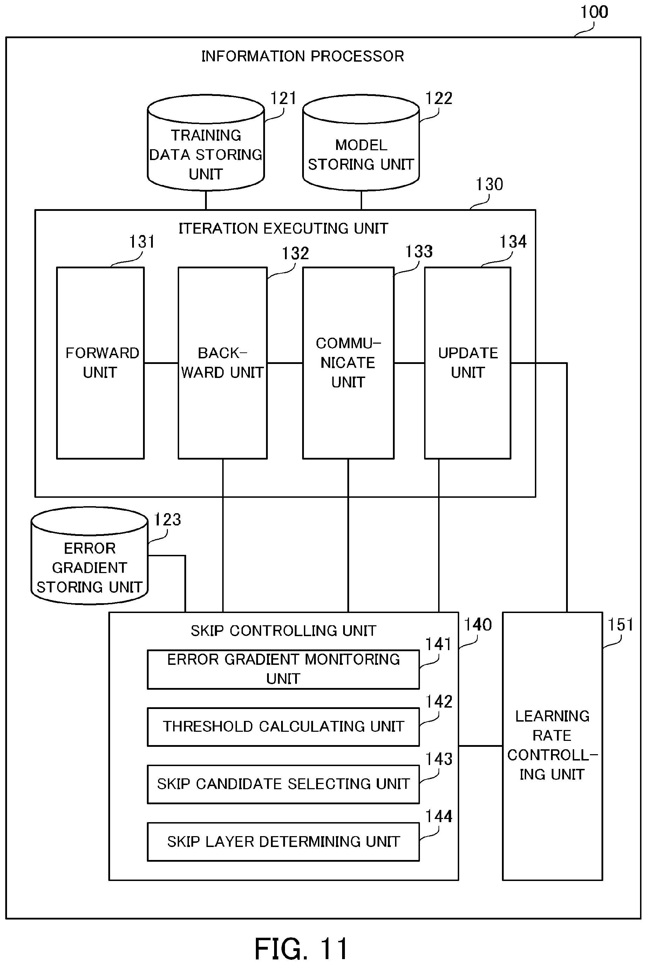

FIG. 11 is a block diagram illustrating exemplary functions of the information processor.

The information processor 100 includes a training data storing unit 121, a model storing unit 122, and an error gradient storing unit 123. These storing units are implemented using a storage area secured, for example, in the GPU memory 105. Note however that a storage area in the RAM 102 may be used instead. The information processor 100 also includes an iteration executing unit 130, a skip controlling unit 140, and a learning rate controlling unit 151. These processing units are implemented, for example, using programs individually executed by the GPUs 104-1, 104-2, 104-3, and 104-4. In this regard, however, programs executed by the CPU 101 may be used instead.

The training data storing unit 121 stores training data. The training data includes a plurality of samples. Each sample includes input data and a training label. The input data is, for example, an image. The training label is, for example, a label indicating the class of an object in the image. The model storing unit 122 stores multi-layer neural networks. The multi-layer neural networks are, for example, multi-layer convolutional neural networks illustrated in FIG. 3. The error gradient storing unit 123 stores information on error gradients of each layer computed during the machine learning.

The iteration executing unit 130 executes iterations and updates weights of the multi-layer neural networks stored in the model storing unit 122. The iteration executing unit 130 counts the number of iterations already executed, and extracts an appropriate sample from the training data stored in the training data storing unit 121. In addition, the iteration executing unit 130 counts the number of epochs already trained and makes a judgment about a stop of the iterations.

The iteration executing unit 130 includes a FORWARD unit 131, a BACKWARD unit 132, a COMMUNICATE unit 133, and an UPDATE unit 134. The FORWARD unit 131 runs the above-mentioned FORWARD phase. The FORWARD phase is run by different GPUs in parallel on different samples. The BACKWARD unit 132 runs the above-mentioned BACKWARD phase following the FORWARD phase. The BACKWARD phase is run by a plurality of GPUs in parallel. Note however that processing of some layers may be skipped under instructions from the skip controlling unit 140.

The COMMUNICATE unit 133 runs the above-mentioned COMMUNICATE phase following the BACKWARD phase. In the COMMUNICATE phase, a plurality of GPUs performs collective communication, such as an AllReduce operation. Note however that processing of some layers may be skipped under instructions from the skip controlling unit 140. The UPDATE unit 134 runs the above-mentioned UPDATE phase following the COMMUNICATE phase. The learning rate used in the UPDATE phase is specified by the learning rate controlling unit 151. The UPDATE phase is run by a plurality of GPUs in parallel. Note however that processing of some layers may be skipped under instructions from the skip controlling unit 140.

The skip controlling unit 140 designates layers practically not learning any more as skip layers, and notifies the BACKWARD unit 132, the COMMUNICATE unit 133, and the UPDATE unit 134 of the skip layers.

The skip controlling unit 140 includes an error gradient monitoring unit 141, a threshold calculating unit 142, a skip candidate selecting unit 143, and a skip layer determining unit 144. The error gradient monitoring unit 141 acquires, for each iteration, error gradients with respect to weights associated with individual edges from the BACKWARD unit 132. The error gradient monitoring unit 141 calculates error gradients of individual layers and registers them in the error gradient storing unit 123. The error gradient monitoring unit 141 calculates an error gradient difference for each layer and provides the skip candidate selecting unit 143 with the error gradient difference. The error gradient monitoring unit 141 also provides the threshold calculating unit 142 with initial error gradients of the individual layers. The error gradient monitoring unit 141 also provides the skip layer determining unit 144 with information used to extract skip layers from skip candidates (e.g., average error gradients and average differences).

The threshold calculating unit 142 calculates, for each layer, a threshold based on the initial error gradient provided by the error gradient monitoring unit 141 every time a new learning rate is set. The threshold is, for example, a value obtained by multiplying the initial error gradient by a rate (e.g., 5%) specified by the user as a hyperparameter. The threshold calculating unit 142 notifies the skip candidate selecting unit 143 of the threshold of each layer.

The skip candidate selecting unit 143 compares, for each layer, the error gradient difference provided by the error gradient monitoring unit 141 with the threshold provided by the threshold calculating unit 142 at each iteration. The skip candidate selecting unit 143 selects, as skip candidates, layers whose error gradient differences are below their thresholds. Note that these descriptions on the threshold calculating unit 142 and the skip candidate selecting unit 143 are given as an example of how to select skip candidates. The skip candidate selecting unit 143 may select skip candidates using a different method. For example, the thresholds of the error gradient differences may be fixed values. In addition, the skip candidate selecting unit 143 may select, for example, layers whose error gradients are below predetermined values as skip candidates. The skip candidate selecting unit 143 notifies the skip layer determining unit 144 of the selected skip candidates.

The skip layer determining unit 144 determines skip layers amongst the skip candidates selected by the skip candidate selecting unit 143. The skip layer determining unit 144 calculates, based on a predetermined function, such as a sigmoid function, an adoption rate corresponding to the total number of iterations since the start of the machine learning. The skip layer determining unit 144 calculates the number of skip layers obtained by multiplying the number of skip candidates by the adoption rate, and extracts as many layers as the calculated number of skip layers from the skip candidates. For the determination of the layers to be extracted, one or more of the five criteria described above are used. The skip layer determining unit 144 notifies the BACKWARD unit 132, the COMMUNICATE unit 133, and the UPDATE unit 134 of the determined skip layers.

The learning rate controlling unit 151 notifies the UPDATE unit 134 of an initial learning rate specified by the user as a hyperparameter. The learning rate controlling unit 151 also counts the number of epochs already trained and changes the learning rate when the number of epochs has reached a predetermined number. For example, at each change of the learning rate, the learning rate control unit 151 decreases the learning rate to one-tenth of the current level. The learning rate controlling unit 151 notifies the UPDATE unit 134 of the newly set learning rate.

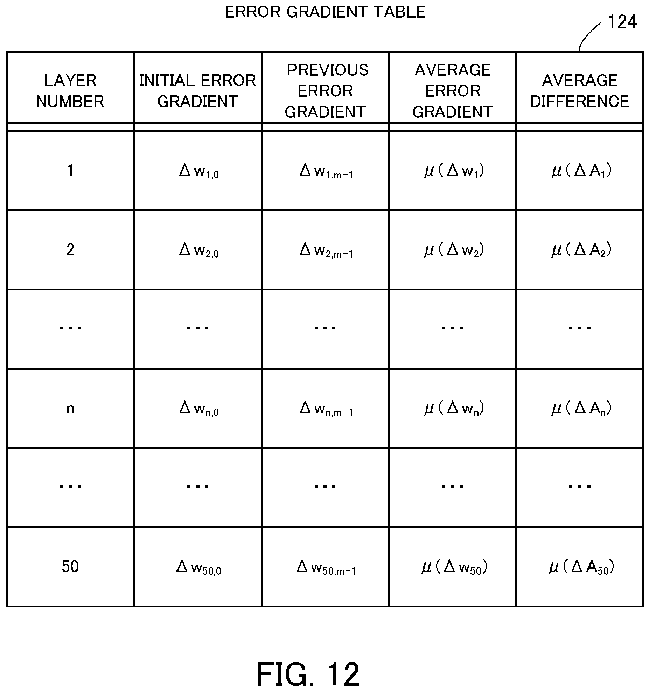

FIG. 12 illustrates an exemplary error gradient table.

An error gradient table 124 is stored in the error gradient storing unit 123. The error gradient table 124 registers, for each of a plurality of layers, the following information: layer number; initial error gradient; previous error gradient; average error gradient; and average difference. The layer number is an identification number for identifying the layer. The initial error gradient is an error gradient at an iteration immediately after a new learning rate is set. The previous error gradient is an error gradient at one iteration before the current.

Before error gradients of iteration m are calculated, error gradients of iteration m-1 are registered in the error gradient table 124 as the previous error gradients. When the error gradients of iteration m are calculated, the previous error gradients of the error gradient table 124 are overwritten with the calculated error gradients of iteration m. At this time, the difference between each error gradient of iteration m-1 and a corresponding error gradient of iteration m is calculated as an error gradient difference. Note that the error gradient of each layer registered in the error gradient table 124 is calculated, based on results of the BACKWARD phase, as the average of absolute values of error gradients with respect to a plurality of weights included in the layer.

The average error gradient is the moving average of error gradients over the period between the current iteration and a predetermined number of iterations ago. The average difference is the moving average of error gradient differences over the period between the current iteration and a predetermined number of iterations ago. The average error gradients and the average differences are updated each time error gradients are calculated at a new iteration. Note that in the case of using the individual error gradients obtained for the period between the current iteration and the predetermined number of iterations ago to calculate the average error gradients and the average differences, the information processor 100 may register the error gradients of each iteration in the error gradient table 124.

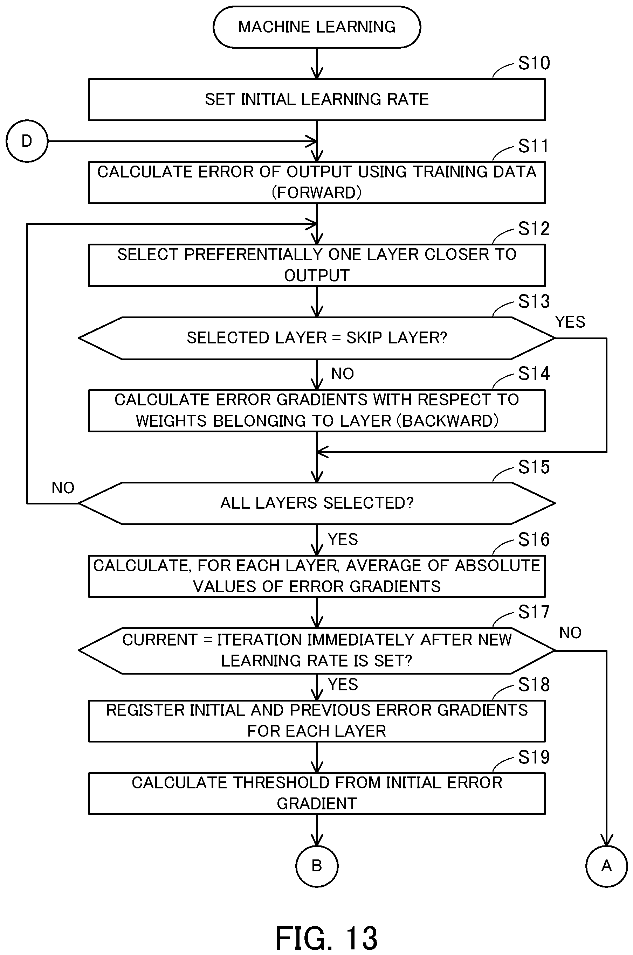

FIG. 13 is a flowchart illustrating an exemplary procedure of machine learning.

The procedure of machine learning described here is, for example, performed by a plurality of GPUs in parallel.

(Step S10) The learning rate controlling unit 151 sets an initial learning rate.

(Step S11) The iteration executing unit 130 extracts a sample from the training data. The FORWARD unit 131 runs the FORWARD phase using the extracted sample. In the FORWARD phase, the FORWARD unit 131 inputs input data included in the sample to a model and then calculates the error between a training label included in the sample and the output of the model.

(Step S12) The BACKWARD unit 132 selects preferentially one layer closer to the output layer.

(Step S13) The BACKWARD unit 132 determines whether the layer selected in step S12 is designated as a skip layer. If the selected layer is a skip layer, the procedure moves to step S15; otherwise moves to step S14.

(Step S14) The BACKWARD unit 132 performs processing of the BACKWARD phase in the selected layer. Specifically, the BACKWARD unit 132 calculates, using backward propagation, error gradients with respect to weights associated with individual edges belonging to the selected layer. If a layer following the selected layer is a skip layer, error gradients with respect to weights associated with the edges belonging to the following layer have not been calculated at the current iteration. In that case, the BACKWARD unit 132 retrieves error gradients calculated last time for the following layer and uses the error gradients.

(Step S15) The BACKWARD unit 132 determines whether all the layers have been selected in step S12, i.e., whether the processing of the BACKWARD phase has reached the leading layer of the model. If all the layers have been selected, the procedure moves to step S16; otherwise returns to step S12.

(Step S16) The error gradient monitoring unit 141 acquires the error gradients with respect to the weights of the individual edges, calculated by the BACKWARD unit 132. The error gradient monitoring unit 141 sorts the acquired error gradients by each layer, and calculates the average of absolute values of the error gradients of each layer as the error gradient of the layer.

(Step S17) The error gradient monitoring unit 141 determines whether the current iteration is an iteration immediately after a new learning rate is set (i.e., iteration 0). If it is iteration 0, the procedure moves to step S18; otherwise moves to step S20.

(Step S18) The error gradient monitoring unit 141 registers, in the error gradient table 124, the error gradient of each layer calculated in step S16 as the initial error gradient and the previous error gradient.

(Step S19) The threshold calculating unit 142 calculates, for each layer, a threshold from the corresponding initial error gradient. For example, the threshold calculating unit 142 defines 5% of the initial error gradient as the threshold. Subsequently, the procedure moves to step S25.

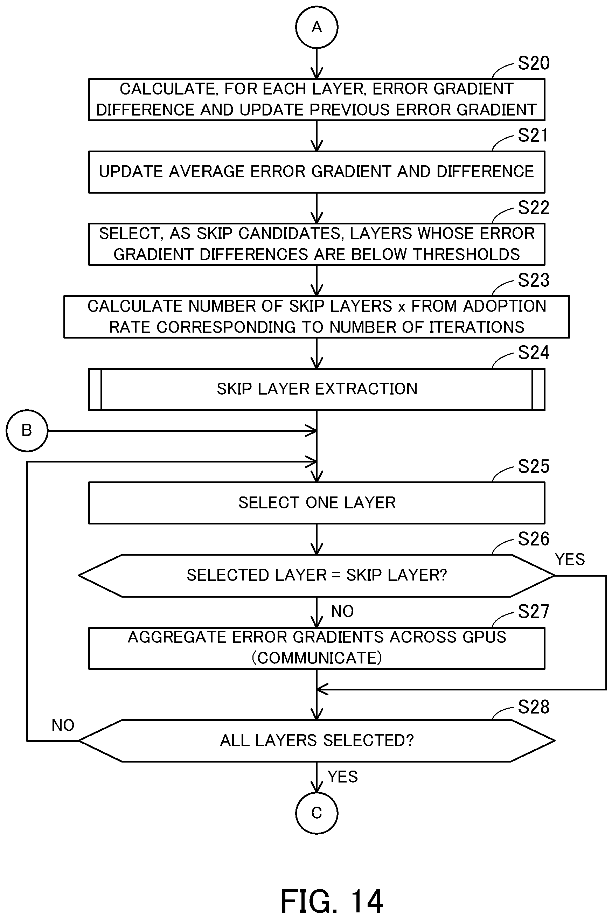

FIG. 14 is a flowchart illustrating the exemplary procedure of machine learning, continuing from FIG. 13.

(Step S20) The error gradient monitoring unit 141 calculates, for each layer, an error gradient difference by subtracting the error gradient calculated in step S16 from the previous error gradient registered in the error gradient table 124. The error gradient monitoring unit 141 also overwrites the previous error gradient in the error gradient table 124 with the error gradient calculated in step S16.

(Step S21) The error gradient monitoring unit 141 calculates, for each layer, the average error gradient based on information registered in the error gradient table 124 and the error gradient calculated in step S16. The error gradient monitoring unit 141 also calculates, for each layer, the average difference based on information registered in the error gradient table 124 and the error gradient difference calculated in step S20. The error gradient monitoring unit 141 overwrites the error gradient table 124 with the calculated average error gradient and average difference.

(Step S22) The skip candidate selecting unit 143 selects, as skip candidates, layers whose error gradient differences calculated in step S20 are below their thresholds calculated in step S19. Note that this method of selection is just an example, and skip candidates may be selected by a different method.

(Step S23) The skip layer determining unit 144 calculates the adoption rate P corresponding to the total number of iterations counted since the start of the machine learning. For example, the skip layer determining unit 144 calculates the adoption rate P based on a sigmoid curve invariant over the time period of the machine learning. The skip layer determining unit 144 counts the number of skip candidates N. Then, the skip layer determining unit 144 calculates the number of skip layers x by multiplying the number of skip candidates N by the adoption rate P.

Note that, when iterations at the same learning rate progress, the skip controlling unit 140 may designate one or more layers as skip layers at an iteration and then additionally select one or more skip candidates at a later iteration. Therefore, the number of skip candidates N above may be the number of skip candidates additionally selected. In that case, the number of skip layers x does not include the number of skip layers already designated. On the other hand, the number of skip candidates N above may be the total number of layers which are determined to meet their convergence conditions, that is, the sum of the number of skip layers already designated and the number of skip candidates additionally selected. In that case, the number of skip layers x includes the number of skip layers already designated.

(Step S24) The skip layer determining unit 144 extracts x skip layers from the N skip candidates selected in step S22. For the skip layer extraction, one or more of the five criteria described above are used. Examples of the skip layer extraction are described later.

(Step S25) The COMMUNICATE unit 133 selects one layer.

(Step S26) The COMMUNICATE unit 133 determines whether the layer selected in step S25 has already been designated as a skip layer by the previous iteration. If the selected layer is a skip layer, the procedure moves to step S28; otherwise moves to step S27.

(Step S27) The COMMUNICATE unit 133 performs processing of the COMMUNICATE phase in the selected layer. Specifically, the COMMUNICATE unit 133 sums, for each weight associated with a corresponding edge, error gradients calculated by multiple GPUs, using an AllReduce operation across the GPUs. The COMMUNICATE unit 133 calculates the average error gradient by dividing the sum of the error gradients by the number of GPUs. Herewith, the error gradients are aggregated across the multiple GPUs. The COMMUNICATE unit 133 also collects information on the layers extracted as skip layers using inter-GPU communication.

(Step S28) The COMMUNICATE unit 133 determines whether all the layers have been selected in step S25. If all the layers have been selected, the procedure moves to step S29; otherwise returns to step S25. Note that the COMMUNICATE unit 133 may select multiple layers in the forward direction (i.e., from the input to the output direction) or in the backward direction (from the output to the input direction). The COMMUNICATE unit 133 may perform the COMMUNICATE phase in multiple layers in parallel.

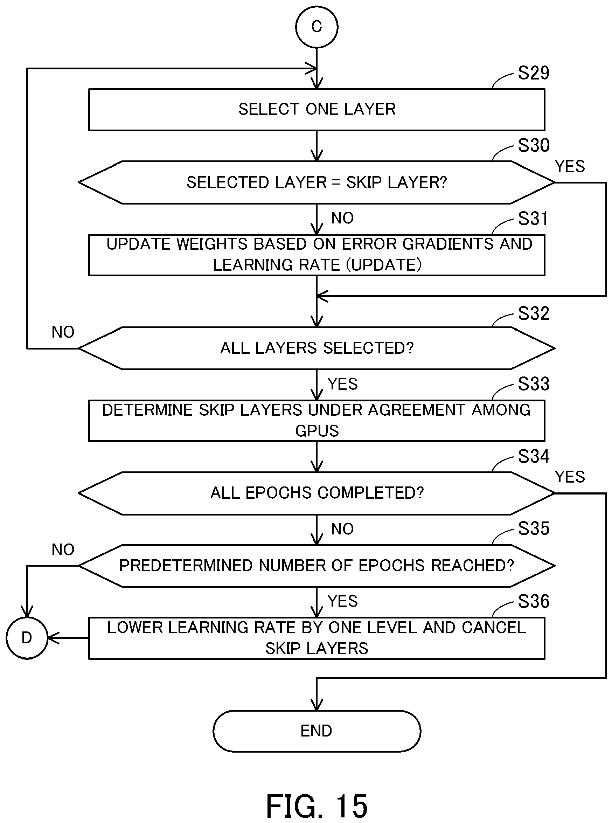

FIG. 15 is a flowchart illustrating the exemplary procedure of machine learning, continuing from FIG. 14.

(Step S29) The UPDATE unit 134 selects one layer.

(Step S30) The UPDATE unit 134 determines whether the layer selected in step S29 has already been designated as a skip layer by the previous iteration. If the selected layer is a skip layer, the procedure moves to step S32; otherwise moves to step S31.

(Step S31) The UPDATE unit 134 performs processing of the UPDATE phase in the selected layer. Specifically, the UPDATE unit 134 updates weights associated with individual edges belonging to the selected layer based on the error gradients aggregated in the COMMUNICATE phase and the current learning rate. For example, the UPDATE unit 134 calculates a subtraction value by multiplying each error gradient by the learning rate and subtracts the subtraction value from the corresponding current weight.

(Step S32) The UPDATE unit 134 determines whether all the layers have been selected in step S29. If all the layers have been selected, the procedure moves to step S33; otherwise returns to step S29. Note that the UPDATE unit 134 may select multiple layers in the forward direction (i.e., from the input to the output direction) or in the backward direction (from the output to the input direction) .

(Step S33) The skip layer determining unit 144 determines skip layers under an agreement among the GPUs, based on the information collected in step S27. If the GPUs are in agreement on layers extracted from the skip candidates, the skip layer determining unit 144 decides the extracted layers as skip layers. If the extracted layers vary among the GPUs, the skip layer determining unit 144 determines whether to designate each layer as a skip layer, using a predefined voting algorithm.

(Step S34) The iteration executing unit 130 determines whether all the epochs have been completed with the current iteration. For example, the iteration executing unit 130 determines whether 760 iterations × 60 epochs have been completed. If all the epochs have been completed, the machine learning stops; otherwise, the procedure moves to step S35.

(Step S35) The learning rate controlling unit 151 determines whether a predetermine number of epochs, which acts as a breakpoint, has been reached. Multiple breakpoints may be predetermined. If a predetermined number of epochs has been reached, the procedure moves to step S36; otherwise returns to step S11.

(Step S36) The learning rate controlling unit 151 lowers the learning rate by one level. For example, the learning rate controlling unit 151 decreases the learning rate to one-tenth of the current level. When the learning rate is changed, the skip layer determining unit 144 cancels the designation of the skip layers. Herewith, at the next iteration, the BACKWARD, COMMUNICATE, and UPDATE phases are performed in all the layers. Subsequently, the procedure returns to step S11.

Next described are examples of the skip layer extraction performed in step S24 above. Three examples of how to combine some of the above-described five criteria are given below.

Note that, as described above, it may happen that the calculated number of skip layers x does not include the number of already existing skip layers. If that is the case, the skip layer determining unit 144 may determine whether to extract a given skip candidate in view of not only relationships between the skip candidate and other skip candidates but also relationships between the skip candidate and the already existing skip layers. Alternatively, the skip layer determining unit 144 may make the determination without taking into consideration the relationships between the skip candidate and the already existing skip layers.

On the other hand, the calculated number of skip layers x may include the number of already existing skip layers, as described above. If that is the case, the skip layer determining unit 144 may preferentially designate the already existing skip layers as skip layers and make up for the remaining deficiencies in the number of skip layers x (i.e., difference between the number of skip layers x and the number of existing skip layers) from the skip candidates. Alternatively, the skip layer determining unit 144 may include the existing skip layers into the skip candidates and decide x skip layers again from scratch.

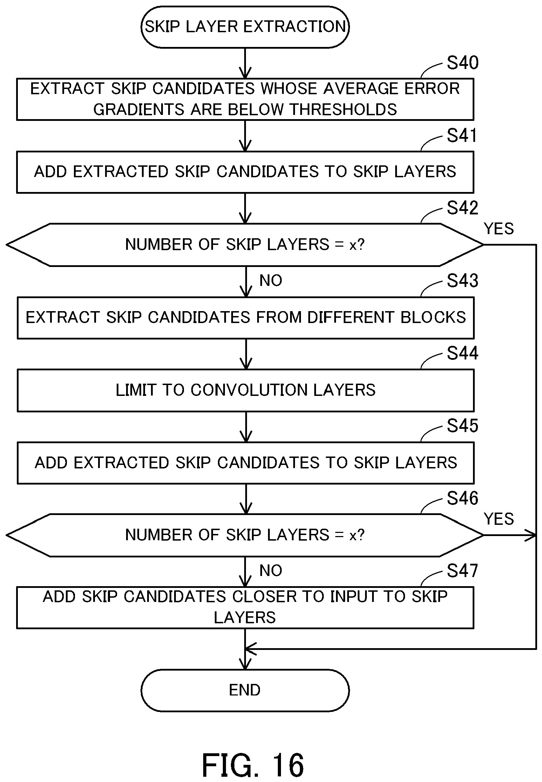

FIG. 16 is a flowchart illustrating a first exemplary procedure of the skip layer extraction.

(Step S40) The skip layer determining unit 144 retrieves the average error gradient of each skip candidate from the error gradient table 124. The skip layer determining unit 144 extracts skip candidates whose average error gradients are below their thresholds. The thresholds may be hyperparameters specified by the user.

(Step S41) The skip layer determining unit 144 adds the skip candidates extracted in step S40 to a set of skip layers. Note that if the number of skip layers after all the extracted skip candidates are added to the set exceeds x, the skip layer determining unit 144 adds only some of the extracted skip candidates to the set so that the number of skip layers becomes x.

(Step S42) The skip layer determining unit 144 determines whether the number of skip layers has reached x. If it has reached x, the skip layer extraction ends; otherwise, the procedure moves to step S43.

(Step S43) The skip layer determining unit 144 sets the upper limit of the number of skip layers per block so that skip layers do not concentrate on the same blocks. The skip layer determining unit 144 extracts skip candidates from different blocks so that the number of skip layers per block would not exceed the upper limit.

(Step S44) The skip layer determining unit 144 removes layers other than convolution layers from the skip candidates extracted in step S43 to thereby limit the extracted skip candidates to convolution layers.

(Step S45) The skip layer determining unit 144 adds the skip candidates extracted through steps S43 and S44 to the set of skip layers. Note that if the number of skip layers after all the extracted skip candidates are added to the set exceeds x, the skip layer determining unit 144 adds only some of the extracted skip candidates to the set so that the number of skip layers becomes x.

(Step S46) The skip layer determining unit 144 determines whether the number of skip layers has reached x. If it has reached x, the skip layer extraction ends; otherwise, the procedure moves to step S47.

(Step S47) The skip layer determining unit 144 preferentially extracts skip candidates closer to the input layer until the number of skip layers reaches x, and adds the extracted skip layers to the set.

Thus, according to the first exemplary skip layer extraction, the above-described criteria D1, D4, and D5 are used sequentially. The criterion D1 is preferentially used, then the criterion D4 is used next when more skip layers are needed, and the criterion D5 is further used when even more skip layers are needed.

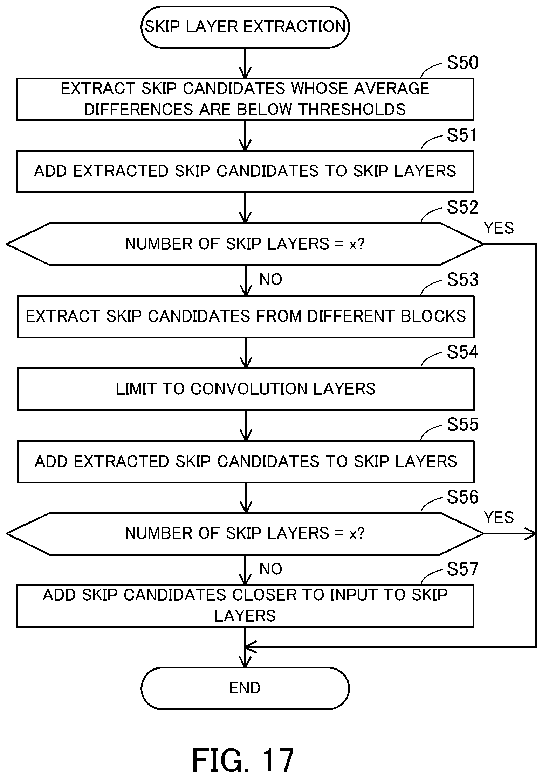

FIG. 17 is a flowchart illustrating a second exemplary procedure of the skip layer extraction.

(Step S50) The skip layer determining unit 144 retrieves the average difference of each skip candidate from the error gradient table 124. The skip layer determining unit 144 extracts skip candidates whose average differences are below their thresholds. The thresholds may be hyperparameters specified by the user.

(Step S51) The skip layer determining unit 144 adds the skip candidates extracted in step S50 to a set of skip layers. Note that if the number of skip layers after all the extracted skip candidates are added to the set exceeds x, the skip layer determining unit 144 adds only some of the extracted skip candidates to the set so that the number of skip layers becomes x.

(Step S52) The skip layer determining unit 144 determines whether the number of skip layers has reached x. If it has reached x, the skip layer extraction ends; otherwise, the procedure moves to step S53.

(Step S53) The skip layer determining unit 144 sets the upper limit of the number of skip layers per block so that skip layers do not concentrate on the same blocks. The skip layer determining unit 144 extracts skip candidates from different blocks so that the number of skip layers per block would not exceed the upper limit.

(Step S54) The skip layer determining unit 144 removes layers other than convolution layers from the skip candidates extracted in step S53 to thereby limit the extracted skip candidates to convolution layers.

(Step S55) The skip layer determining unit 144 adds the skip candidates extracted through steps S53 and S54 to the set of skip layers. Note that if the number of skip layers after all the extracted skip candidates are added to the set exceeds x, the skip layer determining unit 144 adds only some of the extracted skip candidates to the set so that the number of skip layers becomes x.

(Step S56) The skip layer determining unit 144 determines whether the number of skip layers has reached x. If it has reached x, the skip layer extraction ends; otherwise, the procedure moves to step S57.

(Step S57) The skip layer determining unit 144 preferentially extracts skip candidates closer to the input layer until the number of skip layers reaches x, and adds the extracted skip layers to the set.

Thus, according to the second exemplary skip layer extraction, the above-described criteria D2, D4, and D5 are used sequentially. The criterion D2 is preferentially used, then the criterion D4 is used next when more skip layers are needed, and the criterion D5 is further used when even more skip layers are needed.

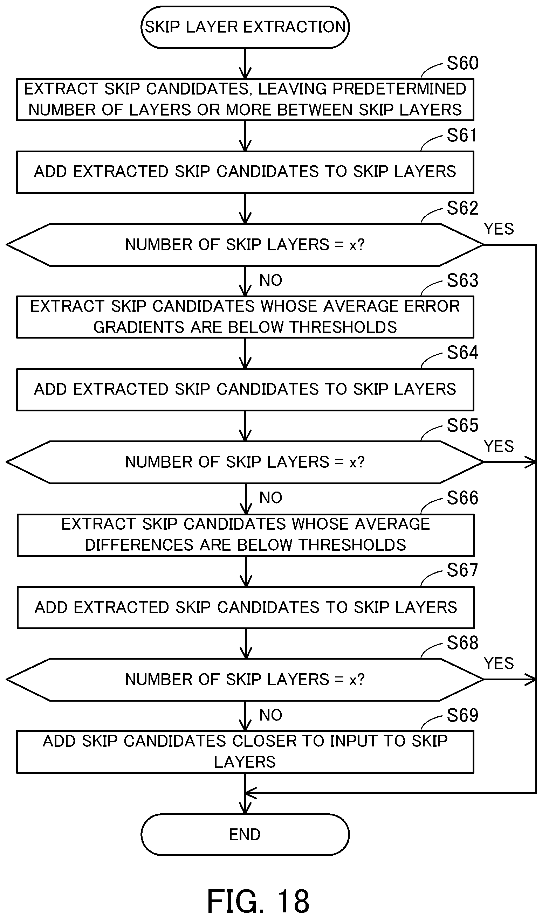

FIG. 18 is a flowchart illustrating a third exemplary procedure of the skip layer extraction.

(Step S60) The skip layer determining unit 144 sets a lower limit of a gap between adjacent skip layers (e.g., two layers) so that skip layers do not appear successively. The skip layer determining unit 144 extracts skip candidates at intervals such that the gap between adjacent skip layers does not fall below the lower limit.

(Step S61) The skip layer determining unit 144 adds the skip candidates extracted in step S60 to a set of skip layers. Note that if the number of skip layers after all the extracted skip candidates are added to the set exceeds x, the skip layer determining unit 144 adds only some of the extracted skip candidates to the set so that the number of skip layers becomes x.

(Step S62) The skip layer determining unit 144 determines whether the number of skip layers has reached x. If it has reached x, the skip layer extraction ends; otherwise, the procedure moves to step S63.

(Step S63) The skip layer determining unit 144 retrieves the average error gradient of each skip candidate from the error gradient table 124. The skip layer determining unit 144 extracts skip candidates whose average error gradients are below their thresholds. The thresholds may be hyperparameters specified by the user.

(Step S64) The skip layer determining unit 144 adds the skip candidates extracted in step S63 to a set of skip layers. Note that if the number of skip layers after all the extracted skip candidates are added to the set exceeds x, the skip layer determining unit 144 adds only some of the extracted skip candidates to the set so that the number of skip layers becomes x.

(Step S65) The skip layer determining unit 144 determines whether the number of skip layers has reached x. If it has reached x, the skip layer extraction ends; otherwise, the procedure moves to step S66.

(Step S66) The skip layer determining unit 144 retrieves the average difference of each skip candidate from the error gradient table 124. The skip layer determining unit 144 extracts skip candidates whose average differences are below their thresholds. The thresholds may be hyperparameters specified by the user.

(Step S67) The skip layer determining unit 144 adds the skip candidates extracted in step S66 to a set of skip layers. Note that if the number of skip layers after all the extracted skip candidates are added to the set exceeds x, the skip layer determining unit 144 adds only some of the extracted skip candidates to the set so that the number of skip layers becomes x.

(Step S68) The skip layer determining unit 144 determines whether the number of skip layers has reached x. If it has reached x, the skip layer extraction ends; otherwise, the procedure moves to step S69.

(Step S69) The skip layer determining unit 144 preferentially extracts skip candidates closer to the input layer until the number of skip layers reaches x, and adds the extracted skip layers to the set.

Thus, according to the third exemplary skip layer extraction, the above-described criteria D3, D1, D2, and D5 are used sequentially. The criterion D3 is preferentially used, and then the criterion D1 is used next when more skip layers are needed. The criterion D2 is used next when even more skip layers are needed, and the criterion D5 is then used when yet more skip layers are needed.

The information processor 100 according to the second embodiment monitors error gradients of the individual layers, and selects, as skip candidates, layers whose error gradients at the latest iteration satisfy their convergence conditions. Amongst the skip candidates, layers whose number corresponds to the adoption rate, which monotonically increases as the machine learning progresses, are designated as skip layers. Then, until the learning rate is changed, processing of the BACKWARD, COMMUNICATE, and UPDATE phases is omitted in the skip layers.

Herewith, calculation of error gradients, inter-GPU communication, and weight updates are stopped in at least some of layers practically not learning any more because their error gradients have converged at the current learning rate. This reduces unnecessary processing, which in turn reduces computational complexity. As a result, it takes less time to execute the machine learning. In addition, not all skip candidates satisfying the convergence conditions are immediately designated as skip layers, thus introducing delays in the designation of skip layers. This allows taking into account the possibility of error gradients to greatly decrease again after decreases in the error gradients have temporarily ceased. Therefore, it is possible to reduce the risk of losing opportunities of parameter improvements, thereby increasing prediction accuracy of the model.

In addition, the monotonic increase in the adoption rate as the machine learning progresses allows reflecting, in the skip control, the long-term trend of the machine learning where the number of layers practically not learning any more increases gradually. As a result, it is possible to incorporate a fine balance between reducing computational complexity and improving the accuracy of the model. In addition, each skip candidate may be selected based on the convergence condition that the error gradient difference exceeds a threshold according to an initial error gradient obtained immediately after the learning rate is set or changed. This allows an appropriate convergence determination in accordance with the level of error gradients at the same learning rate. Further, in the case where error gradients are expected to decrease again after the learning rate changes, calculation of error gradients of each layer, inter-GPU communication, and weight updates are resumed.

According to an aspect, it is possible to reduce the loss in accuracy in the case of stopping parameter updates of some layers included in a model during machine learning.

## Claims

1. A computer program that causes a computer (10) to execute a process comprising:
starting a learning process (16) for building a model (13) including a plurality of layers (13a to 13c) which each include a parameter (14a to 14c), the learning process executing iterations, each of which includes calculating output error of the model using training data (15) and updating a value of the parameter of each of the plurality of layers based on the output error;
selecting, amongst the plurality of layers, two or more candidate layers (13b, 13c) representing candidates for layers, in each of which the updating of the value of the parameter is to be suppressed, based on execution results of a first iteration (16a) of the learning process; and
calculating, based on a number of the iterations executed up to the first iteration, a ratio value (17) which increases with an increase in the number of the iterations executed, and determining, amongst the two or more candidate layers, one or more layers (13b), in each of which the updating of the value of the parameter is to be suppressed at a second iteration (16b) following the first iteration, a number of the one or more layers being determined according to the ratio value.

2. The computer program according to claim 1, wherein:
the number (x) of the one or more layers determined according to the ratio value is calculated by multiplying a number (N) of the two or more candidate layers by the ratio value (P).

3. The computer program according to claim 1, wherein:
the ratio value (P) corresponding to the number of the iterations executed is calculated based on a sigmoid curve (45).

4. The computer program according to claim 1, wherein:
the updating of the value of the parameter is performed at the second iteration in each remaining layer other than the one or more layers whose number (x) is determined according to the ratio value (P) amongst the two or more candidate layers.

5. The computer program according to claim 1, wherein:
each of the iterations of the learning process includes calculating an error gradient (Δw) indicating a gradient of the output error with respect to the parameter and updating the value of the parameter based on the error gradient, and
the selecting of the two or more candidate layers includes monitoring each of the plurality of layers for an inter-iteration change (ΔA) in the error gradient and selecting each of the two or more candidate layers whose inter-iteration change is below a threshold.

6. The computer program according to claim 1, wherein:
the model is a multi-layer neural network (310).

7. The computer program according to claim 1, wherein:
each of the iterations of the learning process includes calculating an error gradient (Δw) indicating a gradient of the output error with respect to the parameter and updating the value of the parameter based on the error gradient,
the process further includes calculating, for each of the plurality of layers, an average (µ(Δw)) of the error gradients across the iterations executed up to the first iteration, and
each of the one or more layers whose number is determined according to the ratio value is determined based on the average of the error gradients.

8. The computer program according to claim 1, wherein:
each of the iterations of the learning process includes calculating an error gradient (Δw) indicating a gradient of the output error with respect to the parameter and updating the value of the parameter based on the error gradient,
the process further includes monitoring each of the plurality of layers for an inter-iteration change (ΔA) in the error gradient and calculating, for each of the plurality of layers, an average (µ(ΔA)) of the inter-iteration changes across the iterations executed up to the first iteration, and
each of the one or more layers whose number is determined according to the ratio value is determined based on the average of the inter-iteration changes.

9. The computer program according to claim 1, wherein:
the plurality of layers is classified into a plurality of blocks (220 to 250), each including two or more layers, and
each of the one or more layers whose number is determined according to the ratio value is determined based on identity of a block to which the layer belongs.

10. The computer program according to claim 1, wherein:
each of the one or more layers whose number is determined according to the ratio value is determined based on spacing of the one or more layers.

11. The computer program according to claim 1, wherein:
each of the one or more layers whose number is determined according to the ratio value is determined based on proximity thereof to an input of the model.

12. A learning method executed by a computer (10), the learning method comprising:
starting a learning process (16) for building a model (13) including a plurality of layers (13a to 13c) which each include a parameter (14a to 14c), the learning process executing iterations, each of which includes calculating output error of the model using training data (15) and updating a value of the parameter of each of the plurality of layers based on the output error;
selecting, amongst the plurality of layers, two or more candidate layers (13b, 13c) representing candidates for layers, in each of which the updating of the value of the parameter is to be suppressed, based on execution results of a first iteration (16a) of the learning process; and
calculating, based on a number of the iterations executed up to the first iteration, a ratio value (17) which increases with an increase in the number of the iterations executed, and determining, amongst the two or more candidate layers, one or more layers (13b), in each of which the updating of the value of the parameter is to be suppressed at a second iteration (16b) following the first iteration, a number of the one or more layers being determined according to the ratio value.

13. An information processing apparatus comprising:
memory means (11) for storing training data (15) and a model (13) including a plurality of layers (13a to 13c) which each include a parameter (14a to 14c); and
processing means (12) for:
starting a learning process (16) executing iterations, each of which includes calculating output error of the model using the training data and updating a value of the parameter of each of the plurality of layers based on the output error,
selecting, amongst the plurality of layers, two or more candidate layers (13b, 13c) representing candidates for layers, in each of which the updating of the value of the parameter is to be suppressed, based on execution results of a first iteration (16a) of the learning process, and
calculating, based on a number of the iterations executed up to the first iteration, a ratio value (17) which increases with an increase in the number of the iterations executed, and determining, amongst the two or more candidate layers, one or more layers (13b), in each of which the updating of the value of the parameter is to be suppressed at a second iteration (16b) following the first iteration, a number of the one or more layers being determined according to the ratio value.

## Amended claims

### Amended claims in accordance with Rule 137(2) EPC.

1. A computer program that causes a computer (10) to execute a process comprising:
starting a learning process (16) for building an image recognition model (13) for predicting a class of an object included in input image data, the image recognition model including a plurality of layers (13a to 13c) which each include a parameter (14a to 14c), the learning process executing iterations, each of which includes calculating output error of the image recognition model using training data (15) and updating a value of the parameter of each of the plurality of layers based on the output error;
selecting, amongst the plurality of layers, two or more candidate layers (13b, 13c) representing candidates for layers, in each of which the updating of the value of the parameter is to be suppressed, based on execution results of a first iteration (16a) of the learning process; and
calculating, based on a number of the iterations executed up to the first iteration, a ratio value (17) which increases with an increase in the number of the iterations executed, and determining, amongst the two or more candidate layers, one or more layers (13b), in each of which the updating of the value of the parameter is to be suppressed at a second iteration (16b) following the first iteration, a number of the one or more layers being determined according to the ratio value.

2. The computer program according to claim 1, wherein:
the number (x) of the one or more layers determined according to the ratio value is calculated by multiplying a number (N) of the two or more candidate layers by the ratio value (P) .

3. The computer program according to claim 1, wherein:
the ratio value (P) corresponding to the number of the iterations executed is calculated based on a sigmoid curve (45) .

4. The computer program according to claim 1, wherein:
the updating of the value of the parameter is performed at the second iteration in each remaining layer other than the one or more layers whose number (x) is determined according to the ratio value (P) amongst the two or more candidate layers.

5. The computer program according to claim 1, wherein:
each of the iterations of the learning process includes calculating an error gradient (Δw) indicating a gradient of the output error with respect to the parameter and updating the value of the parameter based on the error gradient, and
the selecting of the two or more candidate layers includes monitoring each of the plurality of layers for an inter-iteration change (ΔA) in the error gradient and selecting each of the two or more candidate layers whose inter-iteration change is below a threshold.

6. The computer program according to claim 1, wherein:
the image recognition model is a multi-layer neural network (310).

7. The computer program according to claim 1, wherein:
each of the iterations of the learning process includes calculating an error gradient (Δw) indicating a gradient of the output error with respect to the parameter and updating the value of the parameter based on the error gradient,
the process further includes calculating, for each of the plurality of layers, an average (µ (Δw)) of the error gradients across the iterations executed up to the first iteration, and
each of the one or more layers whose number is determined according to the ratio value is determined based on the average of the error gradients.

8. The computer program according to claim 1, wherein:
each of the iterations of the learning process includes calculating an error gradient (Δw) indicating a gradient of the output error with respect to the parameter and updating the value of the parameter based on the error gradient,
the process further includes monitoring each of the plurality of layers for an inter-iteration change (ΔA) in the error gradient and calculating, for each of the plurality of layers, an average (µ(ΔA)) of the inter-iteration changes across the iterations executed up to the first iteration, and
each of the one or more layers whose number is determined according to the ratio value is determined based on the average of the inter-iteration changes.

9. The computer program according to claim 1, wherein:
the plurality of layers is classified into a plurality of blocks (220 to 250), each including two or more layers, and
each of the one or more layers whose number is determined according to the ratio value is determined based on identity of a block to which the layer belongs.

10. The computer program according to claim 1, wherein:
each of the one or more layers whose number is determined according to the ratio value is determined based on spacing of the one or more layers.

11. The computer program according to claim 1, wherein:
each of the one or more layers whose number is determined according to the ratio value is determined based on proximity thereof to an input of the image recognition model.

12. A learning method executed by a computer (10), the learning method comprising:
starting a learning process (16) for building an image recognition model (13) for predicting a class of an object included in input image data, the image recognition model including a plurality of layers (13a to 13c) which each include a parameter (14a to 14c), the learning process executing iterations, each of which includes calculating output error of the image recognition model using training data (15) and updating a value of the parameter of each of the plurality of layers based on the output error;
selecting, amongst the plurality of layers, two or more candidate layers (13b, 13c) representing candidates for layers, in each of which the updating of the value of the parameter is to be suppressed, based on execution results of a first iteration (16a) of the learning process; and
calculating, based on a number of the iterations executed up to the first iteration, a ratio value (17) which increases with an increase in the number of the iterations executed, and determining, amongst the two or more candidate layers, one or more layers (13b), in each of which the updating of the value of the parameter is to be suppressed at a second iteration (16b) following the first iteration, a number of the one or more layers being determined according to the ratio value.

13. An information processing apparatus comprising:
memory means (11) for storing training data (15) and an image recognition model (13) for predicting a class of an object included in input image data, the image recognition model including a plurality of layers (13a to 13c) which each include a parameter (14a to 14c); and
processing means (12) for:
starting a learning process (16) executing iterations, each of which includes calculating output error of the image recognition model using the training data and updating a value of the parameter of each of the plurality of layers based on the output error,
selecting, amongst the plurality of layers, two or more candidate layers (13b, 13c) representing candidates for layers, in each of which the updating of the value of the parameter is to be suppressed, based on execution results of a first iteration (16a) of the learning process, and
calculating, based on a number of the iterations executed up to the first iteration, a ratio value (17) which increases with an increase in the number of the iterations executed, and determining, amongst the two or more candidate layers, one or more layers (13b), in each of which the updating of the value of the parameter is to be suppressed at a second iteration (16b) following the first iteration, a number of the one or more layers being determined according to the ratio value.
